# EUROPÄISCHE PATENTANMELDUNG

(11) **EP 3 159 998 A1**
(43) Veröffentlichungstag der Anmeldung: **26.04.2017**
(21) Anmeldenummer: 15003000.5
(22) Anmeldetag: 20.10.2015
(51) Int. Cl.: H02J 3/38, B60L 11/18, H02J 7/35, H02J 9/06

(54) **STELLGLIED, SYSTEM MIT STELLGILED, ENERGIEVERSORGUNGSEINHEIT FÜR EIN FAHRZEUG-BORDNETZ, KLIMEGERÄT, SPANNUNGSVERSORGUNG FÜR ELEKTRONISCHE SCHALTUNGEN, SYSTEM ZUR ENERGIEVERSORGUNG VON RECHENZENTRUMSEINHELTEN, GLEICHSPANNUNGSLADEGERÄT FÜR ELEKTROFAHRZEUGE**

(71) Anmelder: AmbiBox GmbH, 55120 Mainz (DE)
(72) Erfinder: Die Erfindernennung liegt noch nicht vor
(74) Vertreter: Tilmann, Max Wilhelm

(57) **Zusammenfassung**

Stellglied mit
• einem Gleichstromanschluss an einer Eingangsseite und
• einem Gleichstromanschluss an einer Ausgangsseite und
• einem zwischen dem Gleichstromanschluss an der Eingangsseite und dem Gleichstromanschluss an der Ausgangsseite zwischengeschalteten, bidirektionalen DC-DC-Wandler, wobei der DC-DC-Wandler zumindest ein Bauelement aufweist, dessen Betriebszustand von einem Kontroller angesteuert oder geregelt wird,
wobei
das vom Kontroller durchgeführte Steuerungs-, bzw. Regelungsverfahren für das zumindest eine Bauelement des DC-DC-Wandlers veränderbar ist, so dass das Stellglied eine an der Eingangsseite anliegende. Eingangsspannung aus einem ersten Spannungsbereich in eine an der Ausgangsseite anliegende Ausgangsspannung in einem zweiten Spannungsbereich wandelt, wobei der erste Spannungsbereich von dem zweiten Spannungsbereich dadurch unabhängig ist, dass der Kontroller unterschiedliche Steuerungs-, bzw. Regelungsverfahren durchführen kann,
und/oder
das Stellglied eine an der Eingangsseite anliegende, variable Eingangsspannung in eine an der Ausgangsseite anliegende, variable Ausgangsspannung dadurch wandelt, dass der Kontroller unterschiedliche Steuerungs-, bzw. Regelungsverfahren durchführen kann.

## Beschreibung

Die Erfindung betrifft ein Stellglied, ein System mit Stellglied, eine Energieversorgungseinheit für ein Fahrzeug-Bordnetz, ein Klimagerät, eine Spannungsversorgung für elektronische Schaltungen, ein System zur Energieversorgung von Rechenzentrumseinheiten sowie ein Gleichspannungsladegerät für Elektrofahrzeuge.

Aus DE 10 2012 109 420 A9 ist ein System mit einem Wechselrichter bekannt, der einen DC/DC-Wandler und einen DC/AC-Wandler aufweist sowie einen Gleichspannungszwischenkreis, an den der DC/DC-Wandler und der DC/AC-Wandler angeschlossen sind. Dieser Wechselrichter hat einen Gleichstromanschluss, nämlich den eingangsseitigen Anschluss des DC/DC-Wandlers. Das System hat in Form einer Photovoltaikanlage (dort als Photovoltaikgenerator bezeichnet) eine Gleichstromquelle. Ferner hat das System in Form einer Batterie ein Bauelement, das sowohl als weitere Gleichstromquelle (bei Leistungsentnahme von der Batterie) als auch als Gleichstromsenke (beim Laden der Batterie) eingesetzt werden kann. Die Photovoltaikanlage und die Batterie sind in Parallelschaltung an dem Gleichstromanschluss des Wechselrichters (am Eingang des DC/DC-Wandlers) angeschlossen. Bei dem aus DE 10 2012 109 420 A9 bekannten System ist ferner vorgesehen, dass die Batterie auch an dem Gleichspannungszwischenkreis angeschlossen ist. Damit soll es ermöglicht werden, die Batterie unter Umgehung des DC/DC-Wandlers unmittelbar mit von der PV-Anlage erzeugter Energie aufzuladen. Die DE 10 2012 109 420 A9 befasst sich mit der Frage, in welchen Betriebszuständen die Batterie unmittelbar durch die PV-Anlage geladen werden soll und in welchen Betriebszuständen die Batterie über den Gleichspannungs-zwischenkreis aufgeladen werden soll.

Aus dem Stand der Technik sind ferner Stellglieder mit
- einem Gleichstromanschluss an einer Eingangsseite und
- einem Gleichstromanschluss an einer Ausgangsseite und
- einem zwischen dem Gleichstromanschluss an der Eingangsseite und dem Gleichstromanschluss an der Ausgangsseite zwischengeschalteten, bidirektionalen DC-DC-Wandler
bekannt. Diese Stellglieder sind in der Regel auf ein bestimmtes Einsatzgebiet ausgelegt. Deshalb wird der DC-DC-Wandler bei diesen Stellgliedern in der Regel auch derart ausgeführt, dass das Stellglied eine an der Eingangsseite anliegende Eingangsspannung aus einem ersten Spannungsbereich in eine an der Ausgangsseite anliegende Ausgangsspannung in einem zweiten Spannungsbereich wandelt, wobei das Verhältnis zwischen dem ersten Spannungsbereich und dem zweiten Spannungsbereich fest vorgegeben ist.

Vor diesem Hintergrund lag der Erfindung die Aufgabe zugrunde, die Wirtschaftlichkeit derartiger Stellglieder und des Betriebs eines solchen Systems zu erhöhen.

Diese Aufgabe wird durch das Stellglied gemäß Anspruch 1, ein System mit Stellglied gemäß Anspruch 8 oder 9, eine Energieversorgungseinheit für ein Fahrzeug-Bordnetz gemäß Anspruch 16, ein Klimagerät gemäß Anspruch 18, eine Spannungsversorgung für elektronische Schaltungen gemäß Anspruch 20, ein System zur Energieversorgung von Rechenzentrumseinheiten gemäß Anspruch 22 sowie ein Gleichspannungsladegerät für Elektrofahrzeuge gemäß Anspruch 24 gelöst. Vorteilhafte Ausführungsformen sind in den Unteransprüchen und der hiernach folgenden Beschreibung wiedergegeben.

Die Erfindung geht zum einem von dem Grundgedanken aus, das Stellglied mit
- einem Gleichstromanschluss an einer Eingangsseite und
- einem Gleichstromanschluss an einer Ausgangsseite und
- einem zwischen dem Gleichstromanschluss an der Eingangsseite und dem Gleichstromanschluss an der Ausgangsseite zwischengeschalteten, bidirektionalen DC-DC-Wandler auszuführen, wobei der DC-DC-Wandler zumindest ein Bauelement aufweist, dessen Betriebszustand von einem Kontroller angesteuert oder geregelt wird,
und dabei das vom Kontroller durchgeführte Steuerungs-, bzw. Regelungsverfahren für das zumindest eine Bauelement des DC-DC-Wandlers veränderbar auszuführen, so dass das Stellglied eine an der Eingangsseite anliegende Eingangsspannung aus einem ersten Spannungsbereich in eine an der Ausgangsseite anliegende Ausgangsspannung in einem zweiten Spannungsbereich wandelt, wobei der erste Spannungsbereich von dem zweiten Spannungsbereich dadurch unabhängig ist, dass der Kontroller unterschiedliche Steuerungs-, bzw. Regelungsverfahren durchführen kann.

Aus dem Stand der Technik bekannte Stellglieder mit DC-DC-Wandlern sind regelmäßig dadurch beschränkt, dass die an der Eingangsseite anliegende Spannung nur in einem festen Verhältnis in eine an der Ausgangsseite anliegende Spannung gewandelt werden kann (Hochsetzer, bzw. Tiefsetzer). Der erreichbare Spannungsbereich an der Ausgangsseite (zweiter Spannungsbereich) ist durch dieses feste Verhältnis an den eingangsseitigen Spannungsbereich gekoppelt. Die beiden Spannungsbereiche sind nicht unabhängig voneinander. Dadurch wird das Einsatzgebiet derartiger Stellglieder stark eingeschränkt. Das liegt in der Regel daran, dass bei den DC-DC-Wandlern des Standes der Technik nur ein bei der Herstellung des Stellglieds fest vorgegebenes Steuerungs-, bzw. Regelungsverfahren für das zu steuernde, bzw. zu regelnde Bauteil durchgeführt wird. Hiervon löst sich die Erfindung, in dem sie das vom Kontroller durchgeführte Steuerungs-, bzw. Regelungsverfahren für das zumindest eine Bauelement des DC-DC-Wandlers veränderbar ausgestaltet.

Grundsätzlich ist es denkbar, das erfindungsgemäße Stellglied als Serienbauteil herzustellen, das für verschiedene Einsatzzwecke verkauft wird, in seinem jeweiligen Betriebsumfeld jedoch konstante Eingangs- und/oder Ausgangsbedingungen vorfindet. Dadurch bietet die Erfindung den Vorteil, Skaleneffekte bei der Herstellung nutzen zu können. Es kann eine Stellglied-Hardware realisiert werden, die dann beispielsweise durch Einstellen eines Kontrollers des Stellglieds an die jeweilige Umgebungssituation angepasst werden kann.

Gemäß einem alternativen, aber auch ergänzend einsetzbaren Grundgedanken der Erfindung wird das Stellglied mit
- einem Gleichstromanschluss an einer Eingangsseite und
- einem Gleichstromanschluss an einer Ausgangsseite und
- einem zwischen dem Gleichstromanschluss an der Eingangsseite und dem Gleichstromanschluss an der Ausgangsseite zwischengeschalteten, bidirektionalen DC-DC-Wandler ausgeführt, wobei der DC-DC-Wandler zumindest ein Bauelement aufweist, dessen Betriebszustand von einem Kontroller angesteuert oder geregelt wird,
und wird das vom Kontroller durchgeführte Steuerungs-, bzw. Regelungsverfahren für das zumindest eine Bauelement des DC-DC-Wandlers veränderbar ausgeführt, so dass das Stellglied eine an der Eingangsseite anliegende, variable Eingangsspannung in eine an der Ausgangsseite anliegende, variable Ausgangsspannung wandelt. Aus dem Stand der Technik bekannte Stellglieder mit DC-DC-Wandlern arbeiten in der Regel zumindest an einer Seite, an der Eingangsseite oder an der Ausgangsseite mit einer festen Spannung. Dadurch wird das Einsatzgebiet derartiger Stellglieder stark eingeschränkt. Das liegt in der Regel daran, dass bei den DC-DC-Wandlern des Standes der Technik nur ein bei der Herstellung des Stellglieds fest vorgegebenes Steuerungs-, bzw. Regelungsverfahren für das zu steuernde, bzw. zu regelnde Bauteil durchgeführt wird. Hiervon löst sich die Erfindung, in dem sie das vom Kontroller durchgeführte Steuerungs-, bzw. Regelungsverfahren für das zumindest eine Bauelement des DC-DC-Wandlers veränderbar ausgestaltet.

Auch bei dieser Ergänzung, bzw. Alternative ist es grundsätzlich denkbar, dass erfindungsgemäße Stellglied als Serienbauteil herzustellen, das für verschiedene Einsatzzwecke verkauft wird, in seinem jeweiligen Betriebsumfeld jedoch konstante Eingangs- und/oder Ausgangsbedingungen vorfindet. Dadurch bietet die Erfindung den Vorteil, Skaleneffekte bei der Herstellung nutzen zu können. Es kann eine Stellglied-Hardware realisiert werden, die dann beispielsweise durch Einstellen eines Kontrollers des Stellglieds an die jeweilige Umgebungssituation angepasst werden kann.

In einer bevorzugten Ausführungsform ist die an der Eingangsseite anliegende Eingangsspannung und/oder die an der Ausgangsseite anliegende Ausgangsspannung während des Betriebes in ihrer Höhe und/oder Form änderbar. In der hier beschriebenen besonders bevorzugten Ausführungsform ist die an der Eingangsseite anliegende Eingangsspannung und/oder die an der Ausgangsseite anliegende Ausgangsspannung nicht nur von Einsatzgebiet zu Einsatzgebiet unterschiedlich, sondern variiert sogar während des Betriebs in Höhe und Form. Dies ist insbesondere dann der Fall, wenn das erfindungsgemäße Stellglied mit volatilen Energielieferanten, bspw. Photovoltaikanlagen und Windgeneratoren, und/oder volatilen Energieabnehmern eingesetzt wird. Dadurch dass gemäß der Erfindung das vom Kontroller durchgeführte Steuerungs-, bzw. Regelungsverfahren für das zumindest eine Bauelement des DC-DC-Wandlers veränderbar ausgeführt ist, wird es möglich, in einem ersten Betriebszustand eine Eingangsspannung mit einem ersten Spannungsniveau auf eine Ausgangsspannung zu wandeln im weiteren Betrieb in einem zweiten Betriebszustand eine Eingangsspannung mit einem zweiten Spannungsniveau auf die gleiche Ausgangsspannung, wie im ersten Betriebszustand zu wandeln.

Gemäß einer Alternative oder Ergänzung wird ein Stellglied mit
- einem Gleichstromanschluss an einer Eingangsseite und
- einem Gleichstromanschluss an einer Ausgangsseite und
- einem zwischen dem Gleichstromanschluss an der Eingangsseite und dem Gleichstromanschluss an der Ausgangsseite zwischengeschalteten, bidirektionalen DC-DC-Wandler, wobei der DC-DC-Wandler zumindest ein Bauelement aufweist, dessen Betriebszustand von einem Kontroller angesteuert oder geregelt wird,
bei dem der DC/DC-Wandlers in Resonanzbauweise ausgeführt ist.

Insbesondere bevorzugt ist bei dieser Ausführungsform das vom Kontroller durchgeführte Steuerungs-, bzw. Regelungsverfahren für das zumindest eine Bauelement des DC-DC-Wandlers veränderbar ausgeführt. Es hat sich gezeigt, dass insbesondere bei DC-DC-Wandlern in Resonanzbauweise das vom Kontroller durchgeführte Steuerungs-, bzw. Regelungsverfahren für das zumindest eine Bauelement des DC-DC-Wandlers besonders einfach veränderbar ausgeführt werden kann.

In einer bevorzugten Ausführungsform ist der DC-DC-Wandler in Resonanzbauweise ausgeführt (als Resonanzwandler ausgeführt). Bei einem DC-DC-Wandler erfolgt die Umsetzung der an der Eingangsseite anliegenden Gleichspannung in eine Gleichspannung mit höherem, niedrigerem oder invertiertem Spannungsniveau an der Ausgangsseite mithilfe eines periodisch arbeitenden elektronischen Schalters und eines oder mehrerer Energiespeichern im DC-DC-Wandler. In einer bevorzugten Ausführungsform wird der Schalter über ein PWM-Signal gesteuert, bzw. geregelt. Das PWM-Signal wird insbesondere bevorzugt so gewählt, dass die Frequenz des Schließens des Schalters der Resonanzfrequenz des Schwingkreises des DC-DC-Wandlers entspricht. Die Zeitspanne, wie lange der Schalter geöffnet und geschlossen wird im Verhältnis zu einer sich daran anschließenden Phase, in der der Schalter nur geöffnet ist, hat Einfluß auf die übertragene Leistung. Je länger die Phase andauert, in der der Schalter geöffnet und geschlossen wird, desto mehr Leistung wird übertragen. Durch Wahl des Verhältnisses, wie lange der Schalter innerhalb eines Takts geschlossen und wie lange er innerhalb eines Takts geöffnet ist, kann die Spannungsanhebung, bzw. -absenkung beeinflusst werden. Je länger der Schalter innerhalb eines Takts geschlossen ist, desto höher wird die Spannung gesetzt.

In einer bevorzugten Ausführungsform weist der DC-DC-Wandler in Resonanzbauweise einen Schalter auf, dessen Öffnungs- und Schließstellung und insbesondere dessen Öffnungszeit und dessen Schließstellungszeit über ein PWM-Signal (Pulsweitenmodulations-Signal) von einem Kontroller gesteuert, bzw. geregelt wird. Es hat sich gezeigt, dass eine Veränderung des vom Kontroller durchgeführten Steuerungs-, bzw. Regelungsverfahrens besonders gut durch Anpassung des von dem Kontroller erzeugten PWM-Signals, insbesondere hinsichtlich dessen zeitlichen Verlaufs erreicht werden kann.

In einer bevorzugten Ausführungsform weist der Kontroller des erfindungsgemäßen Stellglieds einen beschreibbaren Speicher auf, beispielsweise einen RAM, ein EPROM oder ein EEPROM. Dieser Speicher kann mit Informationen beschrieben werden, den der Kontroller für die Durchführung des vom Kontroller durchgeführten Steuerungs-, bzw. Regelungsverfahrens benötigt. Diese Information kann beispielsweise das Steuerungs, bzw. Regelungsziel sein. Das Regelungsziel kann beispielsweise eine konstante Ausgangsspannung am Gleichstromanschluss an der Ausgangsseite, oder
ein konstanter Spannungsfluss über das Stellglied oder
eine konstante Ausgangsspannung am Gleichstromanschluss an der Ausgangsseite gekoppelt mit einer Übertragung einer festgelegten übertragenen Leistung über das Stellglied sein.

In dem beschreibbaren Speicher oder in einem separaten Speicher können Steuerungs- und/oder Regelungsstrategien hinterlegt sein, auf die der Kontroller zurückgreift, um das ihm durch den beschreibbaren Speicher vorgegebene Steuerungs-, bzw. Regelungsziel zu erreichen. Beispielsweise kann dort hinterlegt sein, dass der Kontroller bei einer bestimmten vorhandenen Eingangsspannung und bei dem Steuerungs-, bzw. Regelungsziel einer festen Ausgangsspannung ein erstes PWM-Signal an den Schalter senden muß, und kann dort hinterlegt sein, dass der Kontroller bei einer anderen vorhandenen Eingangsspannung zum Erreichen des Steuerungs-, bzw. Regelungsziel einer festen Ausgangsspannung ein zweites PWM-Signal an den Schalter senden muß. Es ist denkbar, dass die Steuerungs- und/oder Regelungsstrategien tabellenartig hinterlegt sind, so dass der Kontroller für jeden Betriebszustand die richtige Steuerungs- und/oder Regelungsstrategie vorfindet. Es ist aber auch denkbar, dass die Steuerungs- und/oder Regelungsstrategien Interpolationsschritte umfassen, um die Zahl der zu speichernden Strategien zu reduzieren.

In einer bevorzugten Ausführungsform sind mehrere Kanäle auf der Eingangsseite und/oder auf der Ausgangsseite vorgesehen. Als Kanal wird ein Gleichstromanschluss an dem Stellglied verstanden. Das Vorsehen mehrerer Kanäle erlaubt es, verschiedene Energiequellen (Gleichstromquellen) oder Energieverbraucher (Gleichstromsenken) an das Stellglied anzuschließen.

In einer bevorzugten Ausführungsform ist eine Auftrennung des Resonanzkreises in mehrere Kanäle vorgesehen. Jeder einzelne Kanal weist einen eigenen Schwingkreis auf. Dadurch wird es möglich, die Energie auf mehrere Kanäle zu verteilen. Insbesondere bevorzugt erfolgt die Kopplung der Kanäle induktiv.

In einer bevorzugten Ausführungsform sind die die einzelnen Kanäle der die Energieübertragung bildenden Schaltungen als Module ausgeführt sind, die aneinander gereiht und/oder miteinander versteckt werden können. Dadurch wird des möglich, dass Stellglied je nach Umgebungsbedingungen auf mehrere Kanäle umzubauen.

Das erfindungsgemäße System weist einen Spannungswandler mit einem Gleichstromanschluss auf. Ferner weist das erfindungsgemäße System eine Gleichstromquelle und/oder einer -senke sowie eine weitere Gleichstromquelle und/oder -senke auf, wobei die Gleichstromquelle und/oder -senke und die weitere Gleichstromquelle und/oder -senke in Parallelschaltung an dem Gleichstromanschluss des Spannungswandlers angeschlossen sind. Das System hat ein Stellglied, mit dem die an der Gleichstromquelle anliegende Spannung und/oder der von der Gleichstromquelle abgegebene Strom und/oder die von der Gleichstromquelle abgegebene Leistung eingestellt werden kann, und/oder ein Stellglied, mit dem die an der Gleichstromsenke anliegende Spannung und/oder der von der Gleichstromsenke aufgenommene Strom und/oder die von der Gleichstromsenke aufgenommene Leistung eingestellt werden kann. Das System hat ferner
- eine Spannungsmessvorrichtung, die die Spannung an dem Gleichstromanschluss messen kann, und/oder
- eine Strommessvorrichtung, die den über den Gleichstromanschluss fließenden Strom messen kann, und/oder
- eine Leistungsermittlungseinheit aufweist, die die über den Gleichstromanschluss an den Spannungswandler gelieferte Leistung, bzw. die über den Gleichstromanschluss von dem Spannungswandler gelieferte Leistung ermittelt.

Das Stellglied des Systems ist in dieser Alternative als erfindungsgemäßes Stellglied ausgeführt, wobei die Ausgangsseite des Stellglieds mit dem Gleichstromanschluss des Spannungswandlers verbunden ist. Insbesondere bevorzugt ist die Gleichstromquelle und/oder -senke an der Eingangsseite des Stellglieds angeschlossen und die Ausgangsseite des Stellglieds in Parallelschaltung mit der weiteren Gleichstromquelle und/oder -senke an den Gleichstromanschluss des Spannungswandlers angeschlossen.

In einer alternativen Ausführungsform des erfindungsgemäßen Systems weist dieses weist einen Spannungswandler mit einem Gleichstromanschluss auf. Ferner weist das erfindungsgemäße System eine Gleichstromquelle und/oder einer -senke sowie eine weitere Gleichstromquelle und/oder -senke auf, wobei die Gleichstromquelle und/oder -senke und die weitere Gleichstromquelle und/oder -senke in Parallelschaltung an dem Gleichstromanschluss des Spannungswandlers angeschlossen sind. Das System hat ein Stellglied, mit dem die an der Gleichstromquelle anliegende Spannung und/oder der von der Gleichstromquelle abgegebene Strom und/oder die von der Gleichstromquelle abgegebene Leistung eingestellt werden kann, und/oder ein Stellglied, mit dem die an der Gleichstromsenke anliegende Spannung und/oder der von der Gleichstromsenke aufgenommene Strom und/oder die von der Gleichstromsenke aufgenommene Leistung eingestellt werden kann. Das System hat ferner
- eine Spannungsmessvorrichtung, die die Spannung an dem Gleichstromanschluss messen kann, und/oder
- eine Strommessvorrichtung, die den über den Gleichstromanschluss fließenden Strom messen kann, und/oder
- eine Leistungsermittlungseinheit aufweist, die die über den Gleichstromanschluss an den Spannungswandler gelieferte Leistung, bzw. die über den Gleichstromanschluss von dem Spannungswandler gelieferte Leistung ermittelt.

Das Stellglied dieser alternativen Ausführungsform des erfindungsgemäßen Systems hat
- einen Gleichstromanschluss an einer Eingangsseite und
- einen Gleichstromanschluss an einer Ausgangsseite und
- einen zwischen dem Gleichstromanschluss an der Eingangsseite und dem Gleichstromanschluss an der Ausgangsseite zwischengeschalteten, bidirektionalen DC-DC-Wandler, der in Resonanzbauweise ausgeführt ist, wobei die Ausgangsseite des Stellglieds mit dem Gleichstromanschluss des Spannungswandlers verbunden ist. Insbesondere bevorzugt ist die Gleichstromquelle und/oder -senke an der Eingangsseite des Stellglieds angeschlossen und die Ausgangsseite des Stellglieds in Parallelschaltung mit der weiteren Gleichstromquelle und/oder -senke an den Gleichstromanschluss des Spannungswandlers angeschlossen.

In einer bevorzugten Ausführungsform der erfindungsgemäßen Systeme ändert die an der Eingangsseite anliegende Eingangsspannung und/oder die an der Ausgangsseite anliegende Ausgangsspannung während des Betriebes selbsttätig. Das ist insbesondere bei Systemen der Fall, bei denen die Gleichstromquelle eine volatile Gleichstromquelle, beispielsweise eine Photovoltaikanlage ist. In einer bevorzugten Ausführungsform ist der Gleichstromanschluss des DC/DC-Wandlers Anschluss an eine Gleichstromquelle und/oder Gleichstromsenke mit dynamischer, im Betrieb veränderbarer Spannung angeschlossen ist, insbesondere an den direkten und/oder parallelen Anschluss an die Gleichstromseite einer Photovoltaikanlage.

In einer bevorzugten Ausführungsform der erfindungsgemäßen Systeme ist ein austauschbarer Energiespeicher vorgesehen. Dieser kann als Gleichstromquelle und/oder -senke dienen. In einer bevorzugten Ausführungsform ist die Spannung des Energiespeichers in einem weiten Bereich variabel, insbesondere im Bereich von 0,01 V DC bis 1000 V DC. Insbesondere bevorzugt ist der Energiespeicher ein elektrochemischer Speicher.

In einer bevorzugten Ausführungsform kann die Systemleistung durch Erhöhung der Spannungsniveaus vergrößert werden, insbesondere durch das Parallelschalten von zusätzlichen Energiespeichern an einem Gleichstromanschluss des DC/DC-Wandlers. In einer besonders bevorzugten Ausführungsform haben die jeweiligen Energiespeicher jeweils gleiche Spannungsniveaus.

Das erfindungsgemäße System kann als Spannungswandler einen Wechselrichter mit Gleichstromanschluss aufweisen. Der Wechselrichter weist zumindest einen DC/AC-Wandler auf. Die Ausgangsseite des Stellglieds ist in dieser Ausführungsform mit dem Gleichstromanschluss des Wechselrichters verbunden. Insbesondere bevorzugt ist die Gleichstromquelle und/oder -senke an der Eingangsseite des Stellglieds angeschlossen und die Ausgangsseite des Stellglieds in Parallelschaltung mit der weiteren Gleichstromquelle und/oder -senke an den Gleichstromanschluss des Spannungswandlers angeschlossen. Die Ausgangsseite des Stellgliedes stellt somit für den Wechselrichter eine Gleichstromquelle und/oder -senke dar. Der Wechselrichter kann neben dem DC/AC-Wandler zudem einen DC/DC-Wandler aufweisen. Der DC/DC-Wandler kann dem Gleichstromanschluss des Wechselrichters nachgeschaltet sein. In einer bevorzugten Ausführungsform dieser Weiterbildung der Erfindung kann ein Gleichspannungszwischenkreis vorgesehen sein, an den der DC/DC-Wandler des Wechselrichters und ein DC/AC-Wandler angeschlossen sind. In einer besonders bevorzugten Ausführungsform sind die weitere Gleichstromquelle, bzw. die Gleichstromsenke des Systems an den Gleichstromanschluss und an den Gleichspannungszwischenkreis angeschlossen, wie dies beispielsweise in Fig. 1 der DE 10 2012 109 420 A9 gezeigt ist. Ist die Gleichstromquelle an den Gleichspannungszwischenkreis angeschlossen, so besteht die Möglichkeit, das volle Leistungsspektrum des DC/AC-Wandlers des Wechselrichters auszunutzen. In der Praxis sind Wechselrichter bekannt, die auf ein niedrigeres Leistungsniveau ausgelegt sind, beispielsweise hinsichtlich der Betriebsweise ihrer Kontrolleinheit oder hinsichtlich der Auslegung eines möglicherweise vorhandenen DC/DC-Wandlers, bei denen aber aus Gründen der Kostenersparnis ein in Serienproduktion hergestellter, leistungsfähigerer DC/AC-Wandler verbaut wird. Das heißt, dass bei einem solchen Wechselrichter der dort verbaute DC/AC-Wandler leistungsfähiger ist, als es für den gesamten Wechselrichter vorgesehen ist. Die Unternehmen machen sich dabei die Kostenersparnis der Serienproduktion eines einzigen DC/AC-Wandlertyps zunutze und verbauen auch leistungsstärkere DC/AC-Wandler in Wechselrichter, die sie für ein niedrigeres Leistungsniveau vertreiben. Mit der gemäß der bevorzugten Ausführungsform vorgesehenen Kontaktierung der weiteren Gleichstromquelle unmittelbar an den Gleichspannungszwischenkreis und somit unter Umgehung des DC/DC-Wandlers des Wechselrichters und gegebenenfalls weiterer vorgesehener Komponenten des Wechselrichters entsteht die Möglichkeit, durch Einspeisung weiterer Leistung in den Gleichspannungs-zwischenkreis aus der weiteren Gleichstromquelle heraus, das volle Leistungsspektrum des in dem Wechselrichter verbauten DC/AC-Wandlers auszunutzen, auch wenn die weiteren Komponenten des Wechselrichters eine solche Ausnutzung des vollen Leistungsspektrum des DC/AC-Wandlers nicht zulassen würden. Somit kann durch Zugabe zusätzlicher Leistung auf den Gleichspannungszwischenkreis eine höhere, über der angegebenen AC-Nennleistung des Wechselrichters liegende Gesamtleistung ermöglicht werden.

Ist gemäß einer bevorzugten Ausführungsform ein separater Anschluss an dem Wechselrichter(gehäuse) vorhanden, über den eine externe Komponente, beispielweise die weitere Gleichstromquelle, bzw. die Gleichstromsenke an einen in einer bevorzugten Ausführungsform vorgesehenen Gleichspannungszwischenkreis des Wechselrichters angeschlossen werden kann, so kann dieser Anschluss auch dazu genutzt werden, weitere Verbraucher mit Gleichspannungsleistung zu versorgen, die der DC/AC-Wandler einem ausgangsseitig an ihm angeschlossenen Netz oder in bevorzugter Bauform einer weiteren angeschlossenen Gleichstromquelle entzieht. Beispielsweise ließe sich über diesen Anschluss und unter Umgehung der DC/AC-Wandlung Notfallenergie zum Betrieb einer Notbeleuchtung, Pumpkreisläufen, beispielsweise bei Umrüstung der Heizungsumwälzpumpe auf DC-Modelle direkt aus dem Gleichspannungszwischenkreis und nach hoch- oder tiefsetzen durch den DC/DC-Wandler abgreifen. Ebenso ließe sich unter Umgehung des DC/DC-Wandlers Notfallenergie unmittelbar aus einem ausgangsseitig an den Wechselrichter angeschlossenen, durch den DC/AC-Wandler gewandelten AC-Netz abgreifen.

Der Wechselrichter kann einen Controller aufweisen, der Stellglieder des Wechselrichters ansteuern kann, um ein MPP-Tracking zu ermöglichen. In einer bevorzugten Ausführungsform hat dieser Controller einen Signalausgang, an dem eine Information über den Arbeitspunkt des Wechselrichters abgegriffen werden kann.

In einer bevorzugten Ausführungsform sind alle Bauteile des Wechselrichters in einem Gehäuse angeordnet. Ist in einer bevorzugten Ausführungsform vorgesehen, dass der Wechselrichter einen Gleichspannungszwischenkreis aufweist und dass die weitere Gleichstromquelle, bzw. die Gleichstromsenke an den Gleichspannungszwischenkreis angeschlossen wird, so kann das Gehäuse neben dem Gleichstromanschluss auch einen Anschluss vorsehen, an den die Gleichstromquelle, bzw. die Gleichstromsenke angeschlossen werden können, um die weitere Gleichstromquelle, bzw. die Gleichstromsenke an den Gleichspannungszwischenkreis anzuschließen.

In einer bevorzugten Ausführungsform weist das erfindungsgemäße System zumindest eine Gleichstromquelle auf, die in dieser Beschreibung teilweise auch als die erste Gleichstromquelle bezeichnet wird. In einer bevorzugten Ausführungsform ist die Gleichstromquelle ein Photovoltaikmodul oder eine auf einem rotatorischen Generator aufbauende Gleichstromquelle, wie beispielsweise eine Windturbine mit Gleichrichter oder eine auf einem thermischen Generator aufbauende Gleichstromquelle, wie beispielsweise eine Dampfturbine mit angeschlossenem Generator und Gleichrichter. Die Gleichstromquelle kann beispielsweise auch eine Brennstoffzelle sein. Neben der in dieser Beschreibung auch als weitere Gleichstromquelle bezeichneten Gleichstromquelle kann das erfindungsgemäße System und das innerhalb des erfindungsgemäßen Regelsystems zu regelnde System eine Vielzahl von Gleichstromquellen aufweisen, beispielsweise mehrere Photovoltaikmodulstränge in Parallelschaltung. Die Arten der Gleichstromquellen können gemischt sein. So sind beispielsweise Systeme denkbar, bei denen Photovoltaikmodule, Windturbinen mit Gleichrichter oder Dampfturbinen mit angeschlossenem Generator und Gleichrichter in Parallelschaltung zueinander verschaltet werden.

Neben der ersten Gleichstromquelle ist in dem erfindungsgemäßen System eine weitere Gleichstromquelle und/oder eine Gleichstromsenke vorgesehen. Dabei sind Ausführungsformen möglich, bei denen eine weitere Gleichstromquelle und eine Gleichstromsenke durch ein Bauelement bereitgestellt werden, beispielsweise durch eine Batterie, die in einem ersten Betriebszustand als Gleichstromquelle und in einem zweiten Betriebszustand als Gleichstromsenke eingesetzt wird, je nachdem, ob der Batterie Leistung entzogen wird, oder ob die Batterie aufgeladen wird. Als Batterie kann eine nur für diesen Zweck vorgesehene Batterie vorgehalten werden. Es ist aber auch denkbar, dass die Batterie Teil eines aus dem System herauslösbaren Objekts, beispielsweise eines batteriebetriebenen Kfz ist. Als Gleichstromsenke kann beispielsweise auch eine reversible Brennstoffzelle vorgesehen sein, die in einem ersten Betriebsmodus als Gleichstromquelle und in einem zweiten Betriebsmodus als Gleichstromsenke eingesetzt wird. Ebenso sind als Gleichstromsenke Baugruppen denkbar, die überflüssige elektrische Energie in thermische Energie umwandeln.

Das erfindungsgemäße System sieht den Einsatz einer Spannungsmessvorrichtung, die die Spannung an dem Gleichstromanschluss messen kann und/oder eine Strommessvorrichtung, die den über den Gleichstromanschluss fließenden Strom messen kann und/oder eine Leistungsermittlungseinheit vor, die die über den Gleichstromanschluss an den Wechselrichter gelieferte Leistung, bzw. die über den Gleichstromanschluss von dem Wechselrichter gelieferte Leistung ermittelt, vor. Durch derartige Messvorrichtungen, bzw. Ermittlungseinheiten wird es dem erfindungsgemäßen Regelverfahren möglich, zu überprüfen, ob der vorbestimmte Wert am Gleichstromanschluss anliegt.

Als Spannungsmessvorrichtung, die die Spannung an dem Gleichstromanschluss messen kann, sind beispielsweise Widerstandsnetzwerke oder Spannungsteilerschaltungen denkbar, aber auch jede andere geeignete Vorrichtung.

Als Strommessvorrichtung, die den über den Gleichstromanschluss fließenden Strom messen kann, sind beispielsweise Messung mittels Messhunts oder Stromwandler oder mittels Hall-Sensoren denkbar, aber auch jede andere geeignete Vorrichtung.

Als Leistungsermittlungseinheit vor, die die über den Gleichstromanschluss an den Wechselrichter gelieferte Leistung, bzw. die über den Gleichstromanschluss von dem Wechselrichter gelieferte Leistung ermittelt, sind beispielsweise Energiezähler aber auch die Berechnung über ermittelte Werte Strom und Spannung denkbar, aber auch jede andere geeignete Vorrichtung.

Ebenso ist es denkbar, Spannung, Strom oder Leistung indirekt zu ermitteln, beispielsweise wenn die Modulkenndaten eines als Gleichstromquelle verwendeten PV-Strings bekannt sind. Dann könnte über die Einstrahlung und Temperatur eine Rückrechnung erfolgen.

Die erfindungsgemäßen Vorteile lassen sich bereits erreichen, wenn eine der drei Vorrichtungen, also eine Spannungsmessvorrichtung, eine Strommessvorrichtung oder Leistungsermittlungseinheit vorgesehen werden. Insbesondere bevorzugt werden jedoch alle drei Vorrichtungen, also eine Spannungsmessvorrichtung, eine Strommessvorrichtung und eine Leistungsermittlungseinheit vorgesehen, um den Prozess möglichst genau zu überwachen. Ferner ist es möglich, nur eine Spannungsmessvorrichtung und eine Strommessvorrichtung oder nur eine Strommessvorrichtung und eine Leistungsermittlungseinheit oder nur eine Spannungsmessvorrichtung und eine Leistungsermittlungseinheit vorzusehen.

Ferner ist bei dem System ein Stellglied vorgesehen, mit dem die an der Gleichstromquelle anliegende Spannung und/oder der von der Gleichstromquelle abgegebene Strom und/oder die von der Gleichstromquelle abgegebene Leistung eingestellt werden kann. Sind als Teil des Systems mehrere Gleichstromquellen vorgesehen, beispielsweise eine erste Gleichstromquelle, beispielsweise ein Photovoltaikmodul und eine weitere Gleichstromquelle, beispielsweise eine Batterie, so kann bei dem erfindungsgemäßen System entweder nur ein Stellglied vorgesehen sein, beispielsweise ein Stellglied mit dem die an der ersten Gleichstromquelle anliegende Spannung und/oder der von der ersten Gleichstromquelle abgegebene Strom und/oder die von der ersten Gleichstromquelle abgegebene Leistung eingestellt werden kann. Ebenso ist es denkbar, nur ein Stellglied vorzusehen, nämlich eins mit dem die an der weiteren Stromquelle anliegende Spannung und/oder der von der weiteren Gleichstromquelle abgegebene Strom und/oder die von der weiteren Gleichstromquelle abgegebene Leistung einstellt werden kann. Ebenso können auch zwei Stellglieder vorgesehen sein, eines mit dem die an der ersten Gleichstromquelle anliegende Spannung und/oder der von der ersten Gleichstromquelle abgegebenen Strom und/oder die von der ersten Gleichstromquelle abgegebenen Leistung eingestellt werden kann, und eines, mit dem die an der weiteren Gleichstromquelle anliegende Spannung und/oder der von der weiteren Gleichstromquelle abgegebene Strom und/oder die von der weiteren Gleichstromquelle abgegebene Leistung eingestellt werden kann. Vergleichbare Kombinationsmöglichkeiten bestehen bei dem Vorhandensein einer Gleichstromsenke oder dem Vorhandensein einer weiteren Gleichstromquelle und einer Gleichstromsenke.

Als Ausführungsformen des erfindungsgemäßen Systems sind die in den nachstehenden Tabellen aufgelisteten Kombinationen möglich:

**System mit einer (ersten) Gleichstromquelle und einer weiteren Gleichstromquelle:**

| Variante | ein Stellglied, mit dem die an der ersten Gleichstromquelle anliegende Spannung eingestellt werden kann | ein Stellglied, mit dem von der ersten Gleichstromquelle abgegebene Strom eingestellt werden kann | ein Stellglied, mit dem die von der ersten Gleichstromquelle abgegebene Leistung eingestellt werden kann | ein Stellglied, mit dem die an der weiteren Gleichstromquelle anliegende Spannung eingestellt werden kann | ein Stellglied, mit dem von der weiteren Gleichstromquelle abgegebene Strom eingestellt werden kann | ein Stellglied, mit dem die von der weiteren Gleichstromquelle abgegebene Leistung eingestellt werden kann |
|---|---|---|---|---|---|---|
| 1 | Vorhanden | Vorhanden | Vorhanden | Nicht vorhanden | Nicht vorhanden | Nicht vorhanden |
| 2 | Nicht vorhanden | Vorhanden | Vorhanden | Nicht vorhanden | Nicht vorhanden | Nicht vorhanden |
| 3 | Nicht vorhanden | Nicht vorhanden | vorhanden | Nicht vorhanden | Nicht vorhanden | Nicht vorhanden |
| 4 | vorhanden | vorhanden | Nicht vorhanden | Nicht vorhanden | Nicht vorhanden | Nicht vorhanden |
| 5 | Vorhanden | Nicht vorhanden | vorhanden | Nicht vorhanden | Nicht vorhanden | Nicht vorhanden |
| 6 | Vorhanden | Nicht vorhanden | Nicht vorhanden | Nicht vorhanden | Nicht vorhanden | Nicht vorhanden |
| 7 | Nicht vorhanden | Vorhanden | Nicht vorhanden | Nicht vorhanden | Nicht vorhanden | Nicht vorhanden |
| 8 | Vorhanden | Vorhanden | Vorhanden | Vorhanden | Vorhanden | Vorhanden |
| 9 | Nicht vorhanden | Vorhanden | Vorhanden | Vorhanden | Vorhanden | Vorhanden |
| 10 | Nicht vorhanden | Nicht vorhanden | vorhanden | Vorhanden | Vorhanden | Vorhanden |
| 11 | vorhanden | vorhanden | Nicht vorhanden | Vorhanden | Vorhanden | Vorhanden |
| 12 | Vorhanden | Nicht vorhanden | vorhanden | Vorhanden | Vorhanden | Vorhanden |
| 13 | Vorhanden | Nicht vorhanden | Nicht vorhanden | Vorhanden | Vorhanden | Vorhanden |
| 14 | Nicht vorhanden | Vorhanden | Nicht vorhanden | Vorhanden | Vorhanden | Vorhanden |
| 15 | Nicht vorhanden | Nicht Vorhanden | Nicht vorhanden | Vorhanden | Vorhanden | Vorhanden |
| 16 | Vorhanden | Vorhanden | Vorhanden | Nicht vorhanden | Vorhanden | Vorhanden |
| 17 | Nicht vorhanden | Vorhanden | Vorhanden | Nicht vorhanden | Vorhanden | Vorhanden |
| 18 | Nicht vorhanden | Nicht vorhanden | vorhanden | Nicht vorhanden | Vorhanden | Vorhanden |
| 19 | vorhanden | vorhanden | Nicht vorhanden | Nicht vorhanden | Vorhanden | Vorhanden |
| 20 | Vorhanden | Nicht vorhanden | vorhanden | Nicht vorhanden | Vorhanden | Vorhanden |
| 21 | Vorhanden | Nicht vorhanden | Nicht vorhanden | Nicht vorhanden | Vorhanden | Vorhanden |
| 22 | Nicht vorhanden | Vorhanden | Nicht vorhanden | Nicht vorhanden | Vorhanden | Vorhanden |
| 23 | Nicht vorhanden | Nicht Vorhanden | Nicht vorhanden | Nicht vorhanden | Vorhanden | Vorhanden |
| 24 | Vorhanden | Vorhanden | Vorhanden | Nicht vorhanden | Nicht vorhanden | vorhanden |
| 25 | Nicht vorhanden | Vorhanden | Vorhanden | Nicht vorhanden | Nicht vorhanden | vorhanden |
| 26 | Nicht vorhanden | Nicht vorhanden | vorhanden | Nicht vorhanden | Nicht vorhanden | vorhanden |
| 27 | vorhanden | vorhanden | Nicht vorhanden | Nicht vorhanden | Nicht vorhanden | vorhanden |
| 28 | Vorhanden | Nicht vorhanden | vorhanden | Nicht vorhanden | Nicht vorhanden | vorhanden |
| 29 | Vorhanden | Nicht vorhanden | Nicht vorhanden | Nicht vorhanden | Nicht vorhanden | vorhanden |
| 30 | Nicht vorhanden | Vorhanden | Nicht vorhanden | Nicht vorhanden | Nicht vorhanden | vorhanden |
| 31 | Nicht vorhanden | Nicht Vorhanden | Nicht vorhanden | Nicht vorhanden | Nicht vorhanden | vorhanden |
| 32 | Vorhanden | Vorhanden | Vorhanden | vorhanden | vorhanden | Nicht vorhanden |
| 33 | Nicht vorhanden | Vorhanden | Vorhanden | vorhanden | vorhanden | Nicht vorhanden |
| 34 | Nicht vorhanden | Nicht vorhanden | vorhanden | vorhanden | vorhanden | Nicht vorhanden |
| 35 | vorhanden | vorhanden | Nicht vorhanden | vorhanden | vorhanden | Nicht vorhanden |
| 36 | Vorhanden | Nicht vorhanden | vorhanden | vorhanden | vorhanden | Nicht vorhanden |
| 37 | Vorhanden | Nicht vorhanden | Nicht vorhanden | vorhanden | vorhanden | Nicht vorhanden |
| 38 | Nicht vorhanden | Vorhanden | Nicht vorhanden | vorhanden | vorhanden | Nicht vorhanden |
| 39 | Nicht vorhanden | Nicht Vorhanden | Nicht vorhanden | vorhanden | vorhanden | Nicht vorhanden |
| 40 | Vorhanden | Vorhanden | Vorhanden | Vorhanden | Nicht vorhanden | vorhanden |
| 41 | Nicht vorhanden | Vorhanden | Vorhanden | Vorhanden | Nicht vorhanden | vorhanden |
| 42 | Nicht vorhanden | Nicht vorhanden | vorhanden | Vorhanden | Nicht vorhanden | vorhanden |
| 43 | vorhanden | vorhanden | Nicht vorhanden | Vorhanden | Nicht vorhanden | vorhanden |
| 44 | Vorhanden | Nicht vorhanden | vorhanden | Vorhanden | Nicht vorhanden | vorhanden |
| 45 | Vorhanden | Nicht vorhanden | Nicht vorhanden | Vorhanden | Nicht vorhanden | vorhanden |
| 46 | Nicht vorhanden | Vorhanden | Nicht vorhanden | Vorhanden | Nicht vorhanden | vorhanden |
| 47 | Nicht vorhanden | Nicht Vorhanden | Nicht vorhanden | Vorhanden | Nicht vorhanden | vorhanden |
| 48 | Vorhanden | Vorhanden | Vorhanden | Vorhanden | Nicht vorhanden | Nicht vorhanden |
| 49 | Nicht vorhanden | Vorhanden | Vorhanden | Vorhanden | Nicht vorhanden | Nicht vorhanden |
| 50 | Nicht vorhanden | Nicht vorhanden | vorhanden | Vorhanden | Nicht vorhanden | Nicht vorhanden |
| 51 | vorhanden | vorhanden | Nicht vorhanden | Vorhanden | Nicht vorhanden | Nicht vorhanden |
| 52 | Vorhanden | Nicht vorhanden | vorhanden | Vorhanden | Nicht vorhanden | Nicht vorhanden |
| 53 | Vorhanden | Nicht vorhanden | Nicht vorhanden | Vorhanden | Nicht vorhanden | Nicht vorhanden |
| 54 | Nicht vorhanden | Vorhanden | Nicht vorhanden | Vorhanden | Nicht vorhanden | Nicht vorhanden |
| 55 | Nicht vorhanden | Nicht Vorhanden | Nicht vorhanden | Vorhanden | Nicht vorhanden | Nicht vorhanden |
| 56 | Vorhanden | Vorhanden | Vorhanden | Nicht vorhanden | Vorhanden | Nicht vorhanden |
| 57 | Nicht vorhanden | Vorhanden | Vorhanden | Nicht vorhanden | Vorhanden | Nicht vorhanden |
| 58 | Nicht vorhanden | Nicht vorhanden | vorhanden | Nicht vorhanden | Vorhanden | Nicht vorhanden |
| 59 | vorhanden | vorhanden | Nicht vorhanden | Nicht vorhanden | Vorhanden | Nicht vorhanden |
| 60 | Vorhanden | Nicht vorhanden | vorhanden | Nicht vorhanden | Vorhanden | Nicht vorhanden |
| 61 | Vorhanden | Nicht vorhanden | Nicht vorhanden | Nicht vorhanden | Vorhanden | Nicht vorhanden |
| 62 | Nicht vorhanden | Vorhanden | Nicht vorhanden | Nicht vorhanden | Vorhanden | Nicht vorhanden |
| 63 | Nicht vorhanden | Nicht Vorhanden | Nicht vorhanden | Nicht vorhanden | Vorhanden | Nicht vorhanden |

**System mit einer Gleichstromquelle und einer Gleichstromsenke:**

| Variante | ein Stellglied, mit dem die an der ersten Gleichstromquelle anliegende Spannung eingestellt werden kann | ein Stellglied, mit dem von der ersten Gleichstromquelle abgegebene Strom eingestellt werden kann | ein Stellglied, mit dem die von der ersten Gleichstromquelle abgegebene Leistung eingestellt werden kann | ein Stellglied, mit dem die an der Gleichstromsenke anliegende Spannung eingestellt werden kann | ein Stellglied, mit dem von der Gleichstromsenke abgegebene Strom eingestellt werden kann | ein Stellglied, mit dem die von der Gleichstromsenke abgegebene Leistung eingestellt werden kann |
|---|---|---|---|---|---|---|
| 64 | Vorhanden | Vorhanden | Vorhanden | Nicht vorhanden | Nicht vorhanden | Nicht vorhanden |
| 65 | Nicht vorhanden | Vorhanden | Vorhanden | Nicht vorhanden | Nicht vorhanden | Nicht vorhanden |
| 66 | Nicht vorhanden | Nicht vorhanden | vorhanden | Nicht vorhanden | Nicht vorhanden | Nicht vorhanden |
| 67 | vorhanden | vorhanden | Nicht vorhanden | Nicht vorhanden | Nicht vorhanden | Nicht vorhanden |
| 68 | Vorhanden | Nicht vorhanden | vorhanden | Nicht vorhanden | Nicht vorhanden | Nicht vorhanden |
| 69 | Vorhanden | Nicht vorhanden | Nicht vorhanden | Nicht vorhanden | Nicht vorhanden | Nicht vorhanden |
| 70 | Nicht vorhanden | Vorhanden | Nicht vorhanden | Nicht vorhanden | Nicht vorhanden | Nicht vorhanden |
| 71 | Vorhanden | Vorhanden | Vorhanden | Vorhanden | Vorhanden | Vorhanden |
| 72 | Nicht vorhanden | Vorhanden | Vorhanden | Vorhanden | Vorhanden | Vorhanden |
| 73 | Nicht vorhanden | Nicht vorhanden | vorhanden | Vorhanden | Vorhanden | Vorhanden |
| 74 | vorhanden | vorhanden | Nicht vorhanden | Vorhanden | Vorhanden | Vorhanden |
| 75 | Vorhanden | Nicht vorhanden | vorhanden | Vorhanden | Vorhanden | Vorhanden |
| 76 | Vorhanden | Nicht vorhanden | Nicht vorhanden | Vorhanden | Vorhanden | Vorhanden |
| 77 | Nicht vorhanden | Vorhanden | Nicht vorhanden | Vorhanden | Vorhanden | Vorhanden |
| 78 | Nicht vorhanden | Nicht Vorhanden | Nicht vorhanden | Vorhanden | Vorhanden | Vorhanden |
| 79 | Vorhanden | Vorhanden | Vorhanden | Nicht vorhanden | Vorhanden | Vorhanden |
| 80 | Nicht vorhanden | Vorhanden | Vorhanden | Nicht vorhanden | Vorhanden | Vorhanden |
| 81 | Nicht vorhanden | Nicht vorhanden | vorhanden | Nicht vorhanden | Vorhanden | Vorhanden |
| 82 | vorhanden | vorhanden | Nicht vorhanden | Nicht vorhanden | Vorhanden | Vorhanden |
| 83 | Vorhanden | Nicht vorhanden | vorhanden | Nicht vorhanden | Vorhanden | Vorhanden |
| 84 | Vorhanden | Nicht vorhanden | Nicht vorhanden | Nicht vorhanden | Vorhanden | Vorhanden |
| 85 | Nicht vorhanden | Vorhanden | Nicht vorhanden | Nicht vorhanden | Vorhanden | Vorhanden |
| 86 | Nicht vorhanden | Nicht Vorhanden | Nicht vorhanden | Nicht vorhanden | Vorhanden | Vorhanden |
| 87 | Vorhanden | Vorhanden | Vorhanden | Nicht vorhanden | Nicht vorhanden | vorhanden |
| 88 | Nicht vorhanden | Vorhanden | Vorhanden | Nicht vorhanden | Nicht vorhanden | vorhanden |
| 89 | Nicht vorhanden | Nicht vorhanden | vorhanden | Nicht vorhanden | Nicht vorhanden | vorhanden |
| 90 | vorhanden | vorhanden | Nicht vorhanden | Nicht vorhanden | Nicht vorhanden | vorhanden |
| 91 | Vorhanden | Nicht vorhanden | vorhanden | Nicht vorhanden | Nicht vorhanden | vorhanden |
| 92 | Vorhanden | Nicht vorhanden | Nicht vorhanden | Nicht vorhanden | Nicht vorhanden | vorhanden |
| 93 | Nicht vorhanden | Vorhanden | Nicht vorhanden | Nicht vorhanden | Nicht vorhanden | vorhanden |
| 94 | Nicht vorhanden | Nicht Vorhanden | Nicht vorhanden | Nicht vorhanden | Nicht vorhanden | vorhanden |
| 95 | Vorhanden | Vorhanden | Vorhanden | vorhanden | vorhanden | Nicht vorhanden |
| 96 | Nicht vorhanden | Vorhanden | Vorhanden | vorhanden | vorhanden | Nicht vorhanden |
| 97 | Nicht vorhanden | Nicht vorhanden | vorhanden | vorhanden | vorhanden | Nicht vorhanden |
| 98 | vorhanden | vorhanden | Nicht vorhanden | vorhanden | vorhanden | Nicht vorhanden |
| 99 | Vorhanden | Nicht vorhanden | vorhanden | vorhanden | vorhanden | Nicht vorhanden |
| 100 | Vorhanden | Nicht vorhanden | Nicht vorhanden | vorhanden | vorhanden | Nicht vorhanden |
| 101 | Nicht vorhanden | Vorhanden | Nicht vorhanden | vorhanden | vorhanden | Nicht vorhanden |
| 102 | Nicht vorhanden | Nicht Vorhanden | Nicht vorhanden | vorhanden | vorhanden | Nicht vorhanden |
| 103 | Vorhanden | Vorhanden | Vorhanden | Vorhanden | Nicht vorhanden | vorhanden |
| 104 | Nicht vorhanden | Vorhanden | Vorhanden | Vorhanden | Nicht vorhanden | vorhanden |
| 105 | Nicht vorhanden | Nicht vorhanden | vorhanden | Vorhanden | Nicht vorhanden | vorhanden |
| 106 | vorhanden | vorhanden | Nicht vorhanden | Vorhanden | Nicht vorhanden | vorhanden |
| 107 | Vorhanden | Nicht vorhanden | vorhanden | Vorhanden | Nicht vorhanden | vorhanden |
| 108 | Vorhanden | Nicht vorhanden | Nicht vorhanden | Vorhanden | Nicht vorhanden | vorhanden |
| 109 | Nicht vorhanden | Vorhanden | Nicht vorhanden | Vorhanden | Nicht vorhanden | vorhanden |
| 110 | Nicht vorhanden | Nicht Vorhanden | Nicht vorhanden | Vorhanden | Nicht vorhanden | vorhanden |
| 111 | Vorhanden | Vorhanden | Vorhanden | Vorhanden | Nicht vorhanden | Nicht vorhanden |
| 112 | Nicht vorhanden | Vorhanden | Vorhanden | Vorhanden | Nicht vorhanden | Nicht vorhanden |
| 113 | Nicht vorhanden | Nicht vorhanden | vorhanden | Vorhanden | Nicht vorhanden | Nicht vorhanden |
| 114 | vorhanden | vorhanden | Nicht vorhanden | Vorhanden | Nicht vorhanden | Nicht vorhanden |
| 115 | Vorhanden | Nicht vorhanden | vorhanden | Vorhanden | Nicht vorhanden | Nicht vorhanden |
| 116 | Vorhanden | Nicht vorhanden | Nicht vorhanden | Vorhanden | Nicht vorhanden | Nicht vorhanden |
| 117 | Nicht vorhanden | Vorhanden | Nicht vorhanden | Vorhanden | Nicht vorhanden | Nicht vorhanden |
| 118 | Nicht vorhanden | Nicht Vorhanden | Nicht vorhanden | Vorhanden | Nicht vorhanden | Nicht vorhanden |
| 119 | Vorhanden | Vorhanden | Vorhanden | Nicht vorhanden | Vorhanden | Nicht vorhanden |
| 120 | Nicht vorhanden | Vorhanden | Vorhanden | Nicht vorhanden | Vorhanden | Nicht vorhanden |
| 121 | Nicht vorhanden | Nicht vorhanden | vorhanden | Nicht vorhanden | Vorhanden | Nicht vorhanden |
| 122 | vorhanden | vorhanden | Nicht vorhanden | Nicht vorhanden | Vorhanden | Nicht vorhanden |
| 123 | Vorhanden | Nicht vorhanden | vorhanden | Nicht vorhanden | Vorhanden | Nicht vorhanden |
| 124 | Vorhanden | Nicht vorhanden | Nicht vorhanden | Nicht vorhanden | Vorhanden | Nicht vorhanden |
| 125 | Nicht vorhanden | Vorhanden | Nicht vorhanden | Nicht vorhanden | Vorhanden | Nicht vorhanden |
| 126 | Nicht vorhanden | Nicht Vorhanden | Nicht vorhanden | Nicht vorhanden | Vorhanden | Nicht vorhanden |

**System mit einer Gleichstromquelle und einem Bauteil, das in einem ersten Betriebsmodus als Gleichstromquelle und in einem zweiten Betriebsmodus als Gleichstromsenke eingesetzt werden kann:**

| Variante | ein Stellglied, mit dem die an der ersten Gleichstromquelle anliegende Spannung eingestellt werden kann | ein Stellglied, mit dem von der ersten Gleichstromquelle abgegebene Strom eingestellt werden kann | ein Stellglied, mit dem die von der ersten Gleichstromquelle abgegebene Leistung eingestellt werden kann | ein Stellglied, mit dem die an dem Bauteil anliegende Spannung eingestellt werden kann | ein Stellglied, mit dem der von dem Bauteil abgegebene Strom eingestellt werden kann | ein Stellglied, mit dem die von dem Bauteil abgegebene Leistung eingestellt werden kann |
|---|---|---|---|---|---|---|
| 127 | Vorhanden | Vorhanden | Vorhanden | Nicht vorhanden | Nicht vorhanden | Nicht vorhanden |
| 128 | Nicht vorhanden | Vorhanden | Vorhanden | Nicht vorhanden | Nicht vorhanden | Nicht vorhanden |
| 129 | Nicht vorhanden | Nicht vorhanden | vorhanden | Nicht vorhanden | Nicht vorhanden | Nicht vorhanden |
| 130 | vorhanden | vorhanden | Nicht vorhanden | Nicht vorhanden | Nicht vorhanden | Nicht vorhanden |
| 131 | Vorhanden | Nicht vorhanden | vorhanden | Nicht vorhanden | Nicht vorhanden | Nicht vorhanden |
| 132 | Vorhanden | Nicht vorhanden | Nicht vorhanden | Nicht vorhanden | Nicht vorhanden | Nicht vorhanden |
| 133 | Nicht vorhanden | Vorhanden | Nicht vorhanden | Nicht vorhanden | Nicht vorhanden | Nicht vorhanden |
| 134 | Vorhanden | Vorhanden | Vorhanden | Vorhanden | Vorhanden | Vorhanden |
| 135 | Nicht vorhanden | Vorhanden | Vorhanden | Vorhanden | Vorhanden | Vorhanden |
| 136 | Nicht vorhanden | Nicht vorhanden | vorhanden | Vorhanden | Vorhanden | Vorhanden |
| 137 | vorhanden | vorhanden | Nicht vorhanden | Vorhanden | Vorhanden | Vorhanden |
| 138 | Vorhanden | Nicht vorhanden | vorhanden | Vorhanden | Vorhanden | Vorhanden |
| 139 | Vorhanden | Nicht vorhanden | Nicht vorhanden | Vorhanden | Vorhanden | Vorhanden |
| 140 | Nicht vorhanden | Vorhanden | Nicht vorhanden | Vorhanden | Vorhanden | Vorhanden |
| 141 | Nicht vorhanden | Nicht Vorhanden | Nicht vorhanden | Vorhanden | Vorhanden | Vorhanden |
| 142 | Vorhanden | Vorhanden | Vorhanden | Nicht vorhanden | Vorhanden | Vorhanden |
| 143 | Nicht vorhanden | Vorhanden | Vorhanden | Nicht vorhanden | Vorhanden | Vorhanden |
| 144 | Nicht vorhanden | Nicht vorhanden | vorhanden | Nicht vorhanden | Vorhanden | Vorhanden |
| 145 | vorhanden | vorhanden | Nicht vorhanden | Nicht vorhanden | Vorhanden | Vorhanden |
| 146 | Vorhanden | Nicht vorhanden | vorhanden | Nicht vorhanden | Vorhanden | Vorhanden |
| 147 | Vorhanden | Nicht vorhanden | Nicht vorhanden | Nicht vorhanden | Vorhanden | Vorhanden |
| 148 | Nicht vorhanden | Vorhanden | Nicht vorhanden | Nicht vorhanden | Vorhanden | Vorhanden |
| 149 | Nicht vorhanden | Nicht Vorhanden | Nicht vorhanden | Nicht vorhanden | Vorhanden | Vorhanden |
| 150 | Vorhanden | Vorhanden | Vorhanden | Nicht vorhanden | Nicht vorhanden | vorhanden |
| 151 | Nicht vorhanden | Vorhanden | Vorhanden | Nicht vorhanden | Nicht vorhanden | vorhanden |
| 152 | Nicht vorhanden | Nicht vorhanden | vorhanden | Nicht vorhanden | Nicht vorhanden | vorhanden |
| 153 | vorhanden | vorhanden | Nicht vorhanden | Nicht vorhanden | Nicht vorhanden | vorhanden |
| 154 | Vorhanden | Nicht vorhanden | vorhanden | Nicht vorhanden | Nicht vorhanden | vorhanden |
| 155 | Vorhanden | Nicht vorhanden | Nicht vorhanden | Nicht vorhanden | Nicht vorhanden | vorhanden |
| 156 | Nicht vorhanden | Vorhanden | Nicht vorhanden | Nicht vorhanden | Nicht vorhanden | vorhanden |
| 157 | Nicht vorhanden | Nicht Vorhanden | Nicht vorhanden | Nicht vorhanden | Nicht vorhanden | vorhanden |
| 158 | Vorhanden | Vorhanden | Vorhanden | vorhanden | vorhanden | Nicht vorhanden |
| 159 | Nicht vorhanden | Vorhanden | Vorhanden | vorhanden | vorhanden | Nicht vorhanden |
| 160 | Nicht vorhanden | Nicht vorhanden | vorhanden | vorhanden | vorhanden | Nicht vorhanden |
| 161 | vorhanden | vorhanden | Nicht vorhanden | vorhanden | vorhanden | Nicht vorhanden |
| 162 | Vorhanden | Nicht vorhanden | vorhanden | vorhanden | vorhanden | Nicht vorhanden |
| 163 | Vorhanden | Nicht vorhanden | Nicht vorhanden | vorhanden | vorhanden | Nicht vorhanden |
| 164 | Nicht vorhanden | Vorhanden | Nicht vorhanden | vorhanden | vorhanden | Nicht vorhanden |
| 165 | Nicht vorhanden | Nicht Vorhanden | Nicht vorhanden | vorhanden | vorhanden | Nicht vorhanden |
| 166 | Vorhanden | Vorhanden | Vorhanden | Vorhanden | Nicht vorhanden | vorhanden |
| 167 | Nicht vorhanden | Vorhanden | Vorhanden | Vorhanden | Nicht vorhanden | vorhanden |
| 168 | Nicht vorhanden | Nicht vorhanden | vorhanden | Vorhanden | Nicht vorhanden | vorhanden |
| 169 | vorhanden | vorhanden | Nicht vorhanden | Vorhanden | Nicht vorhanden | vorhanden |
| 170 | Vorhanden | Nicht vorhanden | vorhanden | Vorhanden | Nicht vorhanden | vorhanden |
| 171 | Vorhanden | Nicht vorhanden | Nicht vorhanden | Vorhanden | Nicht vorhanden | vorhanden |
| 172 | Nicht vorhanden | Vorhanden | Nicht vorhanden | Vorhanden | Nicht vorhanden | vorhanden |
| 173 | Nicht vorhanden | Nicht Vorhanden | Nicht vorhanden | Vorhanden | Nicht vorhanden | vorhanden |
| 174 | Vorhanden | Vorhanden | Vorhanden | Vorhanden | Nicht vorhanden | Nicht vorhanden |
| 175 | Nicht vorhanden | Vorhanden | Vorhanden | Vorhanden | Nicht vorhanden | Nicht vorhanden |
| 176 | Nicht vorhanden | Nicht vorhanden | vorhanden | Vorhanden | Nicht vorhanden | Nicht vorhanden |
| 177 | vorhanden | vorhanden | Nicht vorhanden | Vorhanden | Nicht vorhanden | Nicht vorhanden |
| 178 | Vorhanden | Nicht vorhanden | vorhanden | Vorhanden | Nicht vorhanden | Nicht vorhanden |
| 179 | Vorhanden | Nicht vorhanden | Nicht vorhanden | Vorhanden | Nicht vorhanden | Nicht vorhanden |
| 180 | Nicht vorhanden | Vorhanden | Nicht vorhanden | Vorhanden | Nicht vorhanden | Nicht vorhanden |
| 181 | Nicht vorhanden | Nicht Vorhanden | Nicht vorhanden | Vorhanden | Nicht vorhanden | Nicht vorhanden |
| 182 | Vorhanden | Vorhanden | Vorhanden | Nicht vorhanden | Vorhanden | Nicht vorhanden |
| 183 | Nicht vorhanden | Vorhanden | Vorhanden | Nicht vorhanden | Vorhanden | Nicht vorhanden |
| 184 | Nicht vorhanden | Nicht vorhanden | vorhanden | Nicht vorhanden | Vorhanden | Nicht vorhanden |
| 185 | vorhanden | vorhanden | Nicht vorhanden | Nicht vorhanden | Vorhanden | Nicht vorhanden |
| 186 | Vorhanden | Nicht vorhanden | vorhanden | Nicht vorhanden | Vorhanden | Nicht vorhanden |
| 187 | Vorhanden | Nicht vorhanden | Nicht vorhanden | Nicht vorhanden | Vorhanden | Nicht vorhanden |
| 188 | Nicht vorhanden | Vorhanden | Nicht vorhanden | Nicht vorhanden | Vorhanden | Nicht vorhanden |
| 189 | Nicht vorhanden | Nicht Vorhanden | Nicht vorhanden | Nicht vorhanden | Vorhanden | Nicht vorhanden |

In einer bevorzugten Ausführungsform werden bei einem mit einem DC/DC-Wandler ausgestatteten Wechselrichter in dem DC/DC-Wandler verbaute Halbleiterschalter als Stellglieder verwendet. Aus der Praxis ist es bekannt, dass in Wechselrichter verbaute DC/DC-Wandler mit zwei Halbleiterschalter ausgestattet sind, die die Aufgabe des Stellglieds übernehmen können, so dass die Erfindung mit handelsüblichen Wechselrichtern umgesetzt werden kann. Die Umsetzung der Erfindung erfolgt dann durch alternative Ansteuermuster der Halbleiterschalter. Ein Vorteil dieser Ausführungsform liegt in der geringen Anzahl der notwendigen Bauteile. Sie kann beispielsweise mit zwei Halbleiterschaltern und zwei Dioden (eine Sperr- und eine Freilaufdiode) realisiert werden. In dieser Ausführungsform erfolgt die Abgabe der Leistung über den hochsetzenden Halbleiterschalter, die Aufnahme von Leistung erfolgt durch den tiefsetzenden Halbleiterschalter. Die Einstellung der Spannung und/oder des Stromes erfolgt dann nur durch geeignete Aussteuer-Verhältnisse derselben.

Alternativ kann anstelle der erwähnten Halbleiterschalter auch ein elektromechanisch wirkender Schalter oder eine sonst wirkende schaltende Funktionsgruppe verwendet werden, derart, dass ein DC/DC-Wandler realisiert werden kann.

Ebenso denkbar wäre ein biomechanisch umgesetztes Schaltglied denkbar.

Weiterhin denkbar wäre die Realisierung eines Schaltgliedes auf Basis eines elektromagnetischen Felderzeugers, welcher die Schalthandlung durch Abschnüren oder Öffnen des Elektronenflusses im galvanisch entkoppelten Leiter ermöglicht.

In einer bevorzugten Ausführungsform weist das System einen DC-Bus auf, der an den Gleichstromanschluss angeschlossen ist und an den die Gleichstromquelle und die weitere Gleichstromquelle, bzw. die Gleichstromsenke angeschlossen ist. Der gemeinsame DC-Bus kann eine definierte, konstante Spannung aufweisen. Alternativ kann ein gemeinsamer DC-Bus eingesetzt werden, der eine variable Spannung aufweist.

Das erfindungsgemäße System kann eine übergeordnete Kontrolleinheit aufweisen, die die Kontrolle über alle Energieflüsse des Systems übernimmt und an den Wechselrichter sowie an die weiteren Komponenten des Systems Betriebspunkte vorgibt. Damit ist es zum einen möglich, Betriebssituationen abzubilden, bei der der Wechselrichter in Folge der Überauslegung des Wechselrichters die überschüssige Energie in Richtung der maximalen Leerlaufspannung (nichtlinearer Bereich) ausregelt. Ebenso können Betriebssituationen abgebildet werden, bei denen diese Energie durch Einregeln in den Kurzschlussbereich durch Spannungsverringerung (linearer Bereich) verringert wird. Das System kann somit mehr Leistung umsetzen ohne eine Instabilität im Verhalten der restlichen, angegliederten Baugruppen zu erzeugen. Die Umsetzung der aufgezeigten Eigenschaften wird bevorzugt durch Verändern der Einschalt- und Ausschaltzeiten der vorzugsweise in den einzelnen Baugruppen verbauten Leistungshalbleiter erreicht.

In einer bevorzugten Ausführungsform werden einzelne Elemente des Systems zu einer Box zusammengefasst. Beispielsweise kann die Parallelschaltung der (ersten) Gleichstromquelle mit der weiteren Gleichstromquelle, bzw. der Gleichstromsenke an den Gleichstromanschluss dadurch bereit gestellt werden, dass eine Anschlussbox mit einer Einlassseite an die die erste Gleichstromquelle angeschlossen wird und einer Auslassseite, die an den Gleichstromanschluss angeschlossen wird, vorgesehen sein. An die Box ist ferner ein Anschluss für die weitere Gleichstromquelle, bzw. die Gleichstromsenke vorgesehen. Innerhalb der Box werden die zu den Anschlüssen führenden Leitungen so verschaltet, dass sich die Parallelschaltung ergibt. Eine solche Box erlaubt eine einfach Handhabung und das Nachrüsten bestehender Systeme zu einem erfindungsgemäßen System, bzw. das Anwenden des erfindungsgemäßen Regelverfahrens auf bestehende Systeme. Um das erfindungsgemäße System bereitzustellen, muss ein bestehendes System, bei dem eine Gleichstromquelle an den Gleichstromanschluss eines Wechselrichters angeschlossen ist, lediglich so modifiziert werden, dass die Gleichstromquelle an den Anschluss der Anschlussbox angeschlossen wird und der Ausgang der Anschlussbox an den Gleichstromanschluss angeschlossen wird. An den weiteren Anschluss der Anschlussbox wird dann die weitere Gleichstromquelle, bzw. die Gleichstromsenke angeschlossen. Es sind auch Ausführungen denkbar, bei denen die weitere Gleichstromquelle, bzw. die Gleichstromsenke nicht separat an einen Anschluss der Anschlussbox angeschlossen wird, sondern in der Anschlussbox integriert ist. Die Anschlussbox kann somit an beliebige Wechselrichter angeschlossen werden.

Die Anschlussbox weist insbesondere bevorzugt eine Kontrolleinheit auf und weist ferner - soweit vorhanden - die Spannungsmessvorrichtung, die die Spannung an dem Gleichstromanschluss messen kann, und/oder die Strommessvorrichtung, die den über den Gleichstromanschluss fließenden Strom messen kann und/oder die Leistungsermittlungseinheit auf, die die über den Gleichstromanschluss an den Wechselrichter gelieferte Leistung, bzw. die über den Gleichstromanschluss von dem Wechselrichter gelieferte Leistung ermittelt. Da in einer bevorzugten Ausführungsform der Ausgang der Anschlussbox unmittelbar an dem Gleichstromanschluss angeschlossen ist, können die Messwerte ohne Informationsverlust an dem Ausgang der Anschlussbox ermittelt werden.

In der Kontrolleinheit können Informationen über verschiedene Wechselrichterkonfigurationen abgelegt sein. Dies erlaubt es, die Anschlussbox als Serienbauteil herzustellen, das durch einfache Auswahl einer Parameterkonfiguration an die Systemkonfiguration, insbesondere an den in dem System vorhandenen Wechselrichter angepasst wird.

Die Anschlussbox ist somit in einer bevorzugten Ausführungsform universell einsetzbar. Das gilt nicht nur hinsichtlich des nachgelagerten Wechselrichters, sondern auch hinsichtlich der verwendeten weiteren Gleichstromquelle, bzw. der verwendeten Gleichstromsenke. So ist es möglich, in der Kontrolleinheit der Anschlussbox alle notwendigen Ladealgorithmen für verschiedene Spannungsebenen und Batterietechniken vorzusehen. Die Anschlussbox kann in einem weiten Spannungsbereich, beispielsweise von 48 VDC bis 1000 VDC Batteriespannungen arbeiten, wobei in einer bevorzugten Ausführungsform durch Strombegrenzung sowohl auf der Eingangs- als auch auf der Ausgangsseite eine Leistungslimitierung im Grenzbereich eingestellt werden kann. In einer bevorzugten Ausführungsform wird die Anschlussbox für eine mittlere Betriebseingangsspannung von ca. 205 VDC konzipiert. Bei einer solchen Konfiguration können beispielsweise 2500 W Leistung transferiert werden. Bei Absenkung der Eingangsspannung kann die Abgabeleistung bei immerhin noch 750 W gehalten werden.

Die erfindungsgemäßen Systeme können auch Gegenstand eines erfindungsgemäßen Regelverfahrens sein. Bei diesem Regelverfahren wird das erfindungsgemäße Stellglied im System, mit dem die an der Gleichstromquelle anliegende Spannung und/oder der von der Gleichstromquelle abgegebene Strom und/oder die von der Gleichstromquelle abgegebene Leistung eingestellt werden kann, und/oder das Stellglied, mit dem die an der Gleichstromsenke anliegende Spannung und/oder der von der Gleichstromsenke aufgenommene Strom und/oder die von der Gleichstromsenke aufgenommene Leistung eingestellt werden kann, so gestellt, dass
- die Spannung an dem Gleichstromanschluss und/oder
- der über den Gleichstromanschluss fließende Strom und/oder
- die über den Gleichstromanschluss an den Wechselrichter gelieferte Leistung, bzw. die über den Gleichstromanschluss von dem Wechselrichter gelieferte Leistung
einem vorbestimmten Wert entspricht.

Häufig weisen Wechselrichter ein Maximum Power Point (MPP)-Tracking auf. In einer Ausführungsform wird das MPP-Tracking durch einen als Teil des Wechselrichters vorgesehenen Gleichspannungswandler realisiert, der als Hochsetzer, Tiefsetzer oder Inverter geschaltet wird. Die Stelleingriffe, die der Wechselrichter intern während des MPP-Trackings vornimmt, belasten den Wechselrichter, führen zu Eigenerwärmung und Alterung. Mit dem erfindungsgemäßen Regelverfahren wird es möglich, den Spannungs-, Strom- und/oder Leistungszustand am Eingang des Wechselrichters gleichzuhalten, sodass der Wechselrichter an dem von ihm während des MPP-Trackings gewählten Arbeitspunkt arbeiten kann. Ebenso wird es möglich, den eingangsseitigen Zustand des Wechselrichters so zu beeinflussen, dass dieser einen anderen Punkt wählt, an dem er beispielsweise effizienter arbeitet. Aus diesem Grund ist bei dem erfindungsgemäßen System neben der (ersten) Gleichstromquelle eine weitere Gleichstromquelle und/oder eine Gleichstromsenke vorgesehen. Liefert die erste Gleichstromquelle eine Spannung, bzw. einen Strom, bzw. eine Leistung, die nicht dem vorbestimmten Wert entspricht, so kann durch das Regelverfahren unter Rückgriff auf die weitere Gleichstromquelle ein eingangsseitiger Zustand an dem Gleichstromanschluss eingestellt werden, der dem vorbestimmten Wert entspricht. Vergleichbares gilt für die Gleichstromsenke, die beispielsweise eingesetzt werden kann, wenn die von der ersten Gleichstromquelle bereitgestellte Spannung, bzw. der bereitgestellte Strom, bzw. die bereitgestellte Leistung über dem vorbestimmten Wert liegt.

Der durch das Regelverfahren einzustellende vorbestimmte Wert kann eine Spannung an dem Gleichstromanschluss sein, beispielsweise wenn der Wechselrichter besonders auf das Arbeiten mit einer bestimmten Eingangsspannung ausgelegt ist. Ebenso kann der vorbestimmte Wert ein über den Gleichstromanschluss fließender Gleichstrom sein, wenn beispielsweise der Wechselrichter auf das Arbeiten mit einem bestimmten festgelegten Strom ausgelegt ist. Häufig wird der vorbestimmte Wert eine über den Gleichstromanschluss an den Wechselrichter gelieferte Leistung, bzw. die über den Gleichstromanschluss von dem Wechselrichter gelieferte Leistung sein, da eine Vielzahl von Wechselrichtern leistungsbezogen ausgelegt sind. In einer bevorzugten Ausführungsform wird das erfindungsgemäße Regelverfahren so betrieben, dass mindestens zwei der nachgenannten Größen auf einen vorbestimmten Wert eingeregelt werden, nämlich die Spannung an dem Gleichstromanschluss und/oder der über den Gleichstromanschluss fließende Strom und/oder die über den Gleichstromanschluss an den Wechselrichter gelieferte Leistung, bzw. die über den Gleichstromanschluss von dem Wechselrichter gelieferte Leistung. So sind beispielsweise Ausführungsformen denkbar, bei denen ein primär leistungsbezogen ausgelegter Wechselrichter besonders gut bei einem bestimmten Spannungsniveau an dem Gleichstromanschluss arbeitet. In einem solchen Fall kann das erfindungsgemäße Regelverfahren dazu eingesetzt werden, sowohl die Spannung an dem Gleichstromanschluss auf einen vorbestimmten Wert zu regeln, als auch die über den Gleichstromanschluss über den Wechselrichter gelieferte Leistung, bzw. die über den Gleichstromanschluss von dem Wechselrichter gelieferte Leistung auf einen vorbestimmten Wert zu regeln.

Der vorbestimmte Wert kann auch 0 sein. Beispielsweise kann es gewünscht sein, dass von dem Wechselrichter keine Leistung in ein ausgangsseitig an den Wechselrichter angeschlossenes Netz eingespeist wird. Dies kann erreicht werden, wenn mit dem Regelverfahren die über den Gleichstromanschluss an den Wechselrichter gelieferte Leistung auf den Wert 0 geregelt wird.

Für die Festlegung des vorbestimmten Werts sind verschiedene Herangehensweisen denkbar. Beispielsweise kann die über den Gleichstromanschluss an den Wechselrichter gelieferte Leistung, bzw. die über den Gleichstromanschluss von dem Wechselrichter gelieferte Leistung auf einen Wert festgelegt werden, sodass das unstete Verhalten eines Solarmodulstrangs während eines Tages mit schnellem Wolkenzug im Rahmen der maximalen Transferleistung ausgeglichen werden kann. Die maximale Transferleistung kann die durch die Bauform des Wechselrichters vorgegebene, maximale AC-Leistung sein, die der Wechselrichter abgeben kann. Ebenso kann die maximale Transferleistung geringer als die rein baubedingte AC-Leistung des Wechselrichters sein, beispielsweise wenn der Wechselrichter ausgangsseitig an ein Netz angeschlossen ist und die Netzbetreiber die dauerhafte Abgabe einer bestimmten AC-Leistung fordern. Ebenso kann es sein, dass die Netzbetreiber, ggf. über einen vorbestimmten Zeitraum, eine bestimmte Abnahme von Leistung vorschreiben, so dass die maximale Transferleistung auch einen negativen Wert haben kann. So ist es denkbar, die Netzbelastung eines an der Ausgangsseite des Wechselrichters angeschlossenen Netzes zu minimieren und deshalb die über den Gleichstromanschluss an den Wechselrichtung gelieferte Leistung auf einen maximalen Wert zu begrenzen, bei dessen Überschreiten die Einspeicherung zusätzlicher Energie in einer Batterie (als Beispiel einer Gleichstromsenke) vorgenommen wird. Ebenso kann das erfindungsgemäße Regelverfahren dazu eingesetzt werden, die über den Gleichstromanschluss von dem Wechselrichter gelieferte Leistung auf einen vorbestimmten Wert einzuregeln, der zum jeweiligen Zeitpunkt benötigt wird, um eine bestimmte Menge an Energie aus dem Netz zu ziehen, beispielsweise zur Erhaltungsladung einer als Batteriespeicher ausgebildeten Gleichstromsenke.

In Betriebszuständen, in denen die (erste) Gleichstromquelle überschüssige, durch den Wechselrichter nicht umsetzbare Leistung liefert, kann diese mit dem erfindungsgemäßen Regelverfahren zur späteren Nutzung, beispielsweise am Abend oder in der Nacht sowie beispielsweise zur nachrangigen Ladung eines elektrisch betriebenen Kfz, das dann eine Gleichstromsenke darstellen würde, eingesetzt werden. Dass der Wechselrichter einen Teil der am Gleichstromanschluss bereitgestellten Leistung nicht umsetzen kann, kann man mittels Pulsationsverfahren ermitteln, die die Kennlinie des Modulstranges während der Off-Phasen der Wechselrichtertaktung auslesen können. Beispielsweise kann ein Wechselrichter mit 17 kHz getaktet sein und eine Kontrolleinheit für das erfindungsgemäße Verfahren mit 40 kHz. In den dabei entstehenden Off-Phasen des Wechselrichters können Messungen durchgeführt werden. Ebenso können externe Messglieder, wie beispielsweise Einstrahlungssensoren, die theoretisch verfügbare DC-Leistung des Wechselrichters ermitteln.

In einer bevorzugten Ausführungsform wird der vorbestimmte Wert für eine vorbestimmte Zeit gehalten. Beispielsweise ist es möglich, den vorbestimmten Wert über mehrere Minuten, über mehrere Stunden, über einen Tag und eine Nacht, über mehrere Tage und Nächte, über einen Monat oder über mehrere Monate einzuregeln. Ist beispielsweise gewünscht, dass von dem erfindungsgemäßen System über einen vorbestimmten Zeitabschnitt (Minuten, Stunden, Tage, Monate) eine bestimmte Leistung in ein ausgangsseitig des Wechselrichters vorgesehenes Netz eingespeist wird, so kann dies mit dem erfindungsgemäßen Regelverfahren und dem erfindungsgemäßen System trotz einer möglicherweise nicht kontinuierlich die gleiche Leistung abgebenden ersten Gleichstromquelle realisiert werden, indem Leistung in die Gleichstromsenke eingebracht oder Leistung aus der weiteren Gleichstromquelle entnommen wird, sodass die über den Gleichstromanschluss an den Wechselrichter gelieferte Leistung über den vorgegebenen Zeitraum dem vorbestimmten Wert entspricht, der zur Lieferung einer vorbestimmten Leistung in das Netz notwendig ist. Es sind auch Ausführungsformen möglich, bei denen der vorbestimmte Wert zu verschiedenen Zeiten auf unterschiedliche Werte eingestellt wird, beispielsweise im Tagesverlauf vormittags, mittags, nachmittags und abends andere Werte vorgegeben werden.

In einer bevorzugten Ausführungsform hat der Wechselrichter eine Wechselstromanschluss und das System
- eine zweite Spannungsmessvorrichtung, die die Spannung an dem Wechselstromanschluss messen kann, und/oder
- eine zweite Strommessvorrichtung, die den über den Wechselstromanschluss fließenden Strom messen kann, und/oder
- eine zweite Leistungsermittlungseinheit, die die über den Wechselstromanschluss an den Wechselrichter gelieferte Leistung, bzw. die über den Wechselstromanschluss von dem Wechselrichter gelieferte Leistung ermittelt,
bei dem der vorbestimmte Wert in Abhängigkeit eines von der zweiten Spannungsmessvorrichtung, der zweiten Strommessvorrichtung und/oder der zweiten Leistungsermittlungseinheit ermittelten Werts festgelegt wird.

Diese Ausführungsform kann insbesondere bevorzugt dazu eingesetzt werden, die Menge der in das Netz gelieferten Leistung einzustellen.

Der im Rahmen einer bevorzugten Ausführungsform eingesetzte Wechselrichter kann ein Netzwechselrichter sein, der ausgangsseitig an ein Netz angeschlossen ist, das durch einen Netzbetreiber kontrolliert wird. Der Wechselrichter kann aber auch ein sonstiger Umrichter sein oder ein Inselwechselrichter, an den ausgangsseitig ein von dem Wechselrichter, bzw. dem Betreiber des Wechselrichter kontrolliertes AC-Netz angeschlossen ist.

Mit der Erfindung lässt sich auch eine Energieversorgungseinheit für Fahrzeug-Bordnetze realisieren, mit einem Gleichstromanschluss für den Anschluss des Fahrzeug-Bordnetzes und mit einer Gleichstromquelle und/oder Gleichstromsenke, dadurch gekennzeichnet, dass die Spannungsebene der Gleichstromquelle und/oder Gleichstromsenke (erste Spannungsebene) anderes ist, als die Spannungsebene der an dem Gleichstromanschluss anliegende Gleichspannung (weitere Spannungsebene), wobei die ersten Spannungsebene gleich oder mehr als doppelt so hoch, insbesondere gleich oder mehr als fünffach so hoch ist, wie die weitere Spannungsebene, und dass der Energiefluss bidirektional aus der Energieversorgungseinheit in das Fahrzeug-Bordnetz und aus dem Fahrzeug-Bordnetz in die Energieversorgungseinheit erfolgen kann.

In einer bevorzugten Ausführungsform weist die Energieversorgungseinheit ein erfindungsgemäßes Stellglied auf.

In einer bevorzugten Ausführungsform ist die Energieversorgungseinheit in ein erfindungsgemäßes System eingebettet. Insbesondere bevorzugt kann eine Batterie an den Gleichstromanschluss der Eingangsseite des erfindungsgemäßen Stellers angeschlossen werden und das Fahrzeug-Bordnetz an den Gleichstromanschluss der Ausgangsseite des erfindungsgemäßen Stellers. Die Ausgangsseite des erfindungsgemäßen Stellers ist an den Gleichstromanschluss eines Wechselrichters, bspw. eines Wechselrichters, der einem Generator zugeordnet ist, der von einem Verbrennungsmotor angetrieben wird, angeschlossen. In Parallelschaltung mit der Ausgangsseite des erfindungsgemäßen Stellers können weitere Verbraucher des Fahrzeug-Bordnetzes mit dem Gleichstromanschluss des Wechselrichters verbunden sein.

In einer bevorzugten Ausführungsform ist die Energieversorgungseinheit so ausgebildet, dass durch die Batterie und über das die Batterie mit dem Fahrzeug-Bordnetz verbindende, erfindungsgemäßen Stellglied die benötigte Leistung für den Startvorgang von Verbrennungsmotoren bereitgestellt werden kann.

In einer bevorzugten Ausführungsform kann bei der Energieversorgungseinheit der Energiefluss in seiner Richtung und/oder Höhe gesteuert werden. Das kann insbesondere durch ändern des vom Kontroller durchgeführten Steuerungs-, bzw. Regelungsverfahrens für das zumindest eine Bauelement des DC-DC-Wandlers erreicht werden.

In einer bevorzugten Ausführungsform kann bei der Energieversorgungseinheit ein Leitungsschutz und/oder Kurzschlussschutz in Form einer Überstrom-Erkennung und/oder Unterspannungs-Erkennung durch elektronische und/oder galvanische Trennung erfolgen. Dadurch können separate Bauteile entfallen. Wird das erfindungsgemäße Stellglied mit Messsensoren für die Spannung und/oder den Strom ausgerüstete, so können diese durch Überstrom-Erkennung oder Unterspannungs-Erkennung Fehler im System erkennen. Wird dann die DC-DC-Wandlung im Stellglied gestoppt, ist das System geschützt.

In einer bevorzugten Ausführungsform kann bei der Energieversorgungseinheit eine Anschlussseite und Spannungsebene dermaßen ausgebildet sein, dass die Energieversorgung bidirektional aus einer Fahrzeug-Traktionsbatterie erfolgen kann.

Mit der Erfindung lässt sich auch eine Klimagerät mit einem Gehäuse und einem in dem Gehäuse integrierten Energiespeicher sowie einem Wechselspannungsanschluss und/oder einem Gleichspannungsanschluss für eine externe Energieversorgung bereitstellen.

In einer bevorzugten Ausführungsform weist das Klimagerät ein erfindungsgemäßes Stellglied auf.

In einer bevorzugten Ausführungsform ist das Klimagerät in ein erfindungsgemäßes System eingebettet. Insbesondere bevorzugt kann das Klimagerät einen Wechselstromanschluss zum Anschluss des Klimageräts an ein Wechselstromnetz aufweisen sowie einen Wechselrichter, an dessen Gleichstromanschluss das erfindungsgemäße Stellglied (mit dem Gleichstromanschluss seiner Ausgangsseite) in Parallelschaltung mit einer mit gleichstrombetriebenen Klimaeinheit angeschlossen ist. Die Klimaeinheit kann Heizungselement zum Erwärmen der Luft, Kühlelemente zum Kühlen der Luft und/oder Ventilatoren zum Bewegen der Luft enthalten. An den Gleichstromanschluss der Eingangsseite des erfindungsgemäßen Stellglieds kann ein Energiespeicher angeschlossen sein. Die Parallelschaltung an den Gleichstromanschluss des Wechselrichters kann noch weitere Gleichstromquellen und/oder -senken enthalten. Diese können über einen Gleichstromanschluss des Klimageräts, der an die Parallelschaltung angeschlossen ist, angeschlossen werden.

In einer bevorzugten Ausführungsform ist der Energiespeicher des Klimageräts unmittelbar Bestandteil des Gerätes, bevorzugt ist dies ein elektrochemischer Speicher.

In einer bevorzugten Ausführungsform ist die Gleichspannung am Gleichspannungsanschluss des Klimageräts in ihrem Betrag während des Betriebes veränderbar.

In einer bevorzugten Ausführungsform des Klimageräts ist der Gleichspannungsanschluss zum direkten Anschluss einer Photovoltaikanlage ausgeführt ist.

In einer bevorzugten Ausführungsform des Klimageräts der Gleichspannungsanschluss zum parallelen Anschluss an eine Photovoltaikanlage ausgeführt.

Mit der Erfindung lässt sich auch eine Spannungsversorgung für elektronische Schaltungen realisieren, bei der mindestens eine erste und eine zweite Eingangsspannungen und mindestens eine Ausgangsspannung anliegt und bei der die Ausgangsspannung in ihrem Betrag kleiner als die erste und die zweite Eingangsspannung ist, wobei der Energiefluss von dem ersten und dem zweiten Eingang hin zur Ausgangsseite erfolgen kann.

In einer bevorzugten Ausführungsform weist die Spannungsversorgung für elektronische Schaltungen ein erfindungsgemäßes Stellglied auf.

In einer bevorzugten Ausführungsform ist die Spannungsversorgung für elektronische Schaltungen in ein erfindungsgemäßes System eingebettet. Hier ist das erfindungsgemäße Stellglied mit mehreren Kanälen auf der Eingangsseite ausgeführt. Diese können in einer Parallelschaltung an den Schwingkreis des in einer bevorzugten Ausführungsform als Resonanzwandler ausgeführten DC-DC-Wandlers angeschlossen sein.

In einer bevorzugten Ausführungsform der Spannungsversorgung für elektronische Schaltungen findet zwischen dem ersten Eingang und dem zweiten Eingang ein automatisches Überblenden des Leistungsflusses hin zum Ausgang statt. Solange am zweiten Eingang eine niedrige Eingangsspannung und am ersten Eingang überhaupt keine Eingangsspannung anliegt, treibt die am zweiten Eingang anliegende niedrige Eingangsspannung die Leistungsübertragung des Stellglieds. Es hat sich gezeigt, dass sobald am ersten Eingang eine höhere Eingangsspannung anliegt, diese die Leistungsübertragung des Stellglieds treibt, obwohl am zweiten Eingang nach wie vor die niedrige Eingangsspannung anliegt.

In einer bevorzugten Ausführungsform der Spannungsversorgung für elektronische Schaltungen kann die erste Eingangsspannung und die zweite Eingangsspannung unterschiedliche Spannungsniveaus besitzen und/oder sich der Spannungswert während des Betriebes verändern kann.

In einer bevorzugten Ausführungsform der Spannungsversorgung für elektronische Schaltungen kann die sekundäre Ausgangsspannung einen festen Wert besitzt.

Mit der Erfindung lässt sich auch eine System zur Energieversorgung von Rechenzentrumseinheiten, insbesondere einzelnen Server-Racks, realisieren, bei dem mindestens ein Wechselspannungsanschluss und/oder mindestens ein erster Gleichspannungsanschluss zu einer externen Energieversorgung vorhanden ist und ein Energiespeicher unmittelbar in das System integriert ist und dieser an den Gleichspannungsanschluss angeschlossen ist, wobei mindestens ein zweiter Gleichspannungsanschluss vorhanden ist, an welchem der Anschluss einer volatilen Gleichstromquelle möglich ist.

In einer bevorzugten Ausführungsform weist das System zur Energieversorgung von Rechenzentrumseinheiten ein erfindungsgemäßes Stellglied auf.

In einer bevorzugten Ausführungsform ist das System zur Energieversorgung von Rechenzentrumseinheiten in ein erfindungsgemäßes System eingebettet. Insbesondere ist der Wechselspannungsanschluss der Wechselspannungsausgang eines Wechselrichters, wobei an den Gleichstromanschluss des Wechselrichters ein erfindungsgemäßes Stellglied mit dem Gleichstromanschluss seiner Ausgangsseite angeschlossen ist. An dem Gleichstromanschluss an der Eingangsseite des Stellglieds ist vorzugsweise der Energiespeicher angeschlossen. Der weitere Gleichspannungsanschluss ist insbesondere bevorzugt in Parallelschaltung mit dem Gleichstromanschluss an der Ausgangsseite des Stellgliedes mit dem Gleichstromanschluss des Wechselrichters verbunden. Teil dieser Parallelschaltung bilden auch die Rechenzentrumseinheiten, bzw. ein Rack einer Rechenzentrumseinheit.

In einer bevorzugten Ausführungsform des Systems zur Energieversorgung von Rechenzentrumseinheiten kann das System als Komponente mit in ein Rack integriert werden kann.

In einer bevorzugten Ausführungsform des Systems zur Energieversorgung von Rechenzentrumseinheiten kann der zweite Geleichspannungsanschluss an die Gleichspannungsseite einer Photovoltaikanlage parallel angeschlossen werden kann.

In einer bevorzugten Ausführungsform des Systems zur Energieversorgung von Rechenzentrumseinheiten erfolgt die interne Versorgung innerhalb dieser Rechenzentrumseinheit, insbesondere dem Rack, auf Gleichspannungsebene und es ist nur ein oder mehrere redundante AC/DC-Wandler Bestandteil der Energieversorgungseinheit.

In einer bevorzugten Ausführungsform des Systems zur Energieversorgung von Rechenzentrumseinheiten werden über den Energiespeicher und die Leistungselektronik die Funktionalitäten einer USV und/oder eines Backup-Systems ausgebildet.

Mit der Erfindung lässt sich auch eine Gleichspannungsladegerät für Elektrofahrzeuge aus einem Gleichspannungsnetz, welches einen bidirektionalen Energiefluss ermöglicht, realisieren, bei dem mindestens ein erster Gleichspannungsanschluss und mindestens ein zweiter Gleichspannungsanschluss vorhanden ist, wobei dieser erste Gleichspannungsanschluss und der zweite Gleichspannungsanschluss in der Höhe und/oder Form der Spannung variabel sind, bei dem zudem mindestens einer der Gleichspannungsanschlüsse einen direkten oder parallelen Anschluss an eine volatile Gleichstromquelle zulässt, insbesondere einer Photovoltaikanlage.

In einer bevorzugten Ausführungsform weist das Gleichspannungsladegerät für Elektrofahrzeuge ein erfindungsgemäßes Stellglied auf. Die Batterie des Elektrofahrzeugs kann beispielsweise an den Gleichstromanschluss an der Eingangsseite des Stellglieds angeschlossen sein und eine Gleichstromquelle an den Gleichstromanschluss der Ausgangsseite des Stellgliedes. Ist die Gleichstromquelle eine volatile Gleichstromquelle, beispielsweise eine Photovoltaikanlage, so kann durch verändern des vom Kontroller durchgeführten Steuerungs-, bzw. Regelungsverfahren trotz Variation der Spannung, bzw. Leistung des Gleichstromquelle ein Laden der Batterie mit einer gleichmäßigen Ladespannung erreicht werden, bzw. ein Laden der Batterie mit einer gleichmäßigen Ladeleistung erreicht werden.

In einer bevorzugten Ausführungsform ist das Gleichspannungsladegerät für Elektrofahrzeuge in ein erfindungsgemäßes System eingebettet, bei dem ein Spannungswandler mit einer Ausgangsseite an ein Stromnetz angeschlossen ist. An der Eingangsseite des Spannungswandlers ist ein Stromanschluss vorgesehen, an den der Gleichstromanschluss der Ausgangsseite des Stellgliedes angeschlossen ist. Dann es gemäß einer ersten Ausführungsform möglich, die Batterie des Elektrofahrzeuges in Parallelschaltung mit dem Gleichstromanschluss an der Ausgangsseite des Stellglieds an den Gleichstromanschluss an der Eingangsseite des Spannungswandlers anzuschließen und an dem Gleichstromanschluss der Eingangsseite des Stellglieds eine weitere Batterie vorzusehen, die über das Stellglied Leistung an die Batterie des Elektrofahrzeugs abgibt, wenn nicht genügend Leistung aus dem Stromnetz gezogen werden kann. In einer alternativen Ausführungsform ist es denkbar, die Batterie des Elektrofahrzeugs an den Gleichstromanschluss der Eingangsseite des Stellglieds anzuschließen und den Gleichstromanschluss der Ausgangsseite des Stellglieds an den Gleichstromanschluss des Spannungswandlers anzuschließen. Als Teil der Parallelschaltung können bei beiden Alternativen weitere Gleichstromquellen und/oder -senken eingebunden sein, beispielsweise auch volatile Gleichstromquellen, wie Photovoltaikanlagen. Das Stromnetz kann ein Wechselstromnetz und der Spannungswandler ein Wechselrichter sein. Das Stromnetz kann auch ein Gleichstromnetz und der Spannungswandler ein Gleichstromwandler sein.

In einer bevorzugten Ausführungsform des Gleichspannungsladegeräts für Elektrofahrzeuge ist dieses für Leistungen kleiner gleich 50 kW, insbesondere Leistungen kleiner gleich 20 kW ausgelegt und die Leistungsdichte, die Leistung in kW pro Volumen in Liter, ist größer oder proportional der Leistung, bevorzugt 1 kW/l beträgt, insbesondere bevorzugt 2 kW/l beträgt und ganz besonders bevorzugt 5 kW/l beträgt.

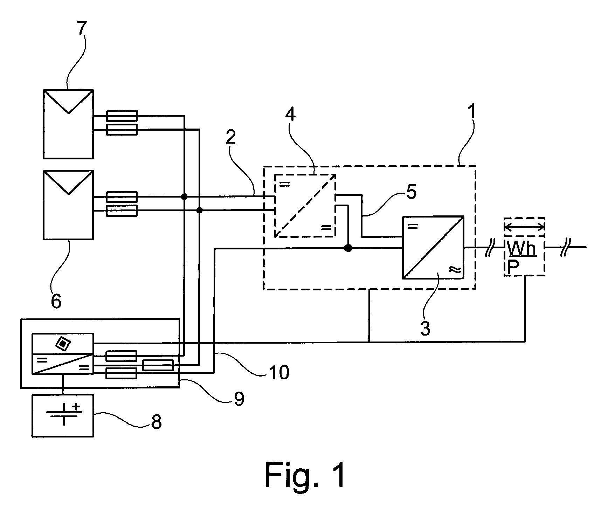

Nachfolgend wird die Erfindung anhand einer lediglich Ausführungsbeispiele der Erfindung näher darstellenden Figuren erläutert. Darin zeigen
- Fig. 1: eine schematische Darstellung eines erfindungsgemäßen Systems mit einem erfindungsgemäßen Stellglied;
- Fig. 2: eine schematische Darstellung eines erfindungsgemäßen Stellglieds in einem erfindungsgemäßen System;
- Fig. 3: eine schematische Darstellung einer Energieversorgungseinheit eines Fahrzeug-Bordnetzes nach dem Stand der Technik;
- Fig. 4: eine schematische Darstellung einer Energieversorgungseinheit eines Fahrzeug-Bordnetzes gemäß der Erfindung;
- Fig. 5: den Verlauf der Spannung, des Stroms und der Leistung an der Ausgangsseite eines erfindungsgemäßen Stellglieds über die Zeit;
- Fig. 6: eine schematische Darstellung eines erfindungsgemäßen Klimageräts;
- Fig. 7: eine schematische Darstellung eines erfindungsgemäßen Stellglieds mit einem DC-DC-Wandler in Resonanzbauweise
- Fig. 8: eine schematische Darstellung eines erfindungsgemäßen Stellglieds mit mehreren Kanälen an der Eingangsseite und einem DC-DC-Wandler in Resonanzbauweise und
- Fig. 9: eine schematische Ansicht eines erfindungsgemäßen Stellglieds mit einem DC-DC-Wandler in Resonanzbauweise.

Das in der Figur dargestellte System weist einen Wechselrichter 1 mit einem Gleichstromanschluss 2 auf. Der Wechselrichter weist einen DC/AC-Wandler 3 und einen DC/DC-Wandler 4 auf. Ferner weist der Wechselrichter einen Gleichspannungszwischenkreis 5 auf, über welchen der DC/DC-Wandler und der DC/AC-Wandler verbunden sind. Das erfindungsgemäße System weist ferner zwei Gleichstromquellen 6, 7 in Form von Solarmodulen auf. Die Gleichstromquellen 6, 7 sind parallel geschaltet. Ferner weist das erfindungsgemäße System eine weitere Gleichstromquelle und ein Gleichstromsenke in Form einer Batterie 8 auf, die in einem ersten Betriebsmodus als Gleichstromquelle und in einem zweiten Betriebsmodus als Gleichstromsenke eingesetzt werden kann. Die zwei Gleichstromquellen 6, 7 und die Batterie 8 sind in Parallelschaltung an den Gleichstromanschluss 2 des Wechselrichters 1 angeschlossen.

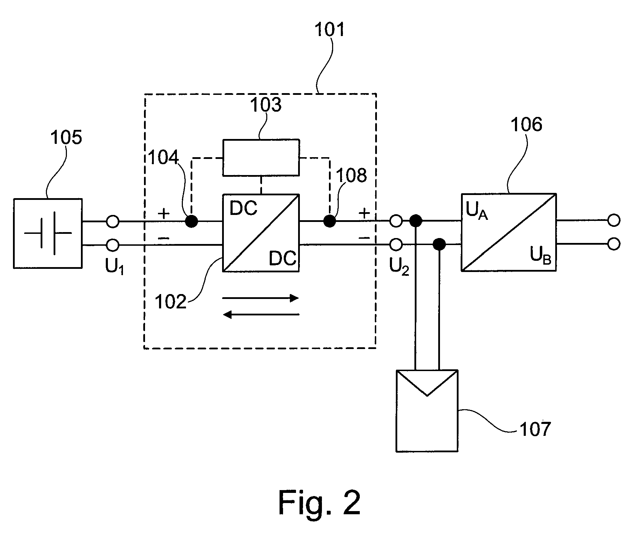

Eine Anschlussbox 9 ist vorgesehen. In dieser Anschlussbox 9 befindet sich insbesondere die Kontrolleinheit und das erfindungsgemäße Stellglied für die Durchführung des erfindungsgemäßen Regelverfahrens. Das Stellglied 9 weist einen Gleichstromanschluss an einer Eingangsseite auf, über den es mit der Batterie 8 verbunden ist. Ferner weist das Stellglied 9 einen Gleichstromanschluss an einer Ausgangsseite auf, über den es in Parallelschaltung mit den zwei Gleichstromquellen 6, 7 an den Gleichstromanschluss 2 des Wechselrichters 1 angeschlossen ist. Das Stellglied 9 weist ferner einen zwischen dem Gleichstromanschluss an der Eingangsseite und dem Gleichstromanschluss an der Ausgangsseite zwischengeschalteten, bidirektionalen DC-DC-Wandler auf. Dieser ist nach Art des in Fig. 2 näher dargestellten Stellgliedes aufgebaut.

In der Anschlussbox 9 befinden sich ferner die Messvorrichtungen für die über den Gleichstromanschluss 2 anliegende Spannung und den über den Gleichstromanschluss 2 fließenden Strom. Durch die unmittelbare Verschaltung der Anschlussbox 9 an den Gleichstromanschluss 2 in Parallelschaltung können die in der Anschlussbox 9 integrierten Messvorrichtungen diese Messungen vollziehen. Ferner ist ausgangsseitig des Wechselrichters 1 eine Messvorrichtung für die ausgangsseitig abgegebene Leistung vorgehsehen.

Mittels einer zusätzlichen Leitung 10 ist die Anschlussbox und damit die Batterie 8 an den Gleichspannungszwischenkreis 5 angeschlossen.

Fig. 2 zeigt einen möglichen Aufbau eines erfindungsgemäßen Stellglieds 101 in einem erfindungsgemäßen System. Das Stellglied 101 weist einen Gleichstromanschluss u1 an einer Eingangsseite und einen Gleichstromanschluss u2 an einer Ausgangsseite auf. Zwischen dem Gleichstromanschluss u1 an der Eingangsseite und dem Gleichstromanschluss u2 an der Ausgangsseite ist ein bidirektionalen DC-DC-Wandler 102 zwischengeschaltet. Ein Kontroller 103 regelt den DC-DC-Wandler 102. Messstellen 104 und 108 vor und nach dem DC-DC-Wandler 102 messen die Spannung in den Gleichstromsträngen, die vom Gleichstromanschluss u1 zum DC-DC-Wandler 102 und vom DC-DC-Wandler 102 zum Gleichstromanschluss u2 führen. Sie bilden eine Grundlage des Regelungsverfahrens, mit dem der Kontroller 103 den DC-DC-Wandler regelt.

Mit dem Gleichstromanschluss u1 an der Eingangsseite ist eine Gleichstromquelle und/oder -senke in Form einer Batterie 105 verbunden. Diese kann in einem ersten Betriebszustand des Stellglieds 101 als Gleichstromquelle fungieren und Energie an das Stellglied 101 und die an der Ausgangsseite des Stellglieds 101 vorhandenen Komponenten liefern. In einem anderen Betriebszustand kann die Batterie 105 als Gleichstromsenke fungieren und Energie aufnehmen, die über das Stellglied 101 von den übrigen, an der Ausgangsseite des Stellglieds 101 vorhandenen Komponenten an die Batterie 105 geliefert wird.

Der Gleichstromanschluss u2 an der Ausgangsseite ist in Parallelschaltung mit einer weiteren Gleichstromquelle und/oder -senke, beispielsweise einer volatilen Gleichstromquelle, beispielsweise einer Photovoltaikanlange 107 an den Gleichstromanschluss eines Wechselrichters 106 angeschlossen.

Teil des Kontroller 3 ist ein Speicher. In diesem Speicher sind Steuerungs- und Regelungsstragien abgelegt. In einer ersten Ausführungsform ist es möglich, durch einen nicht näher dargestellten Zugriff festzulegen, welche Steuerungs- und Regelungsstrategie der Kontroller 3 umsetzen soll. So ist es beispielsweise denkbar, ein in Serienproduktion hergestelltes, erfindungsgemäßes Stellglied in eine konkrete Umgebung einzubauen und durch Zugriff auf den Speicher des Kontrollers festzulegen, welche Steuerungs- und Regelungsstrategie der Kontroll des in dieser konkreten Umgebung eingebauten Stellglieds durchführen soll. Ergänzend oder alternativ ist es denkbar, in den Speicher ein Steurungs-, bzw. Regelungsziel zu schreiben, beispielsweise das Steuerungs- und Regelungsziel einer konstanten Ausgangsspannung, wobei der Kontroller ausgehend von dem Steuerungs- und Regelungsziel die geeignete, abgespeicherte Steuerungs- und Regelungsstragie wählt, bzw. je nach sich möglicherweise selbst in einer konkreten Umgebung ergebenden, sich ändernden Umständen zwischen abgespeicherten Steuerungs- und Regelungsstrategien wechselt, um das Regelungsziel zu erreichen.

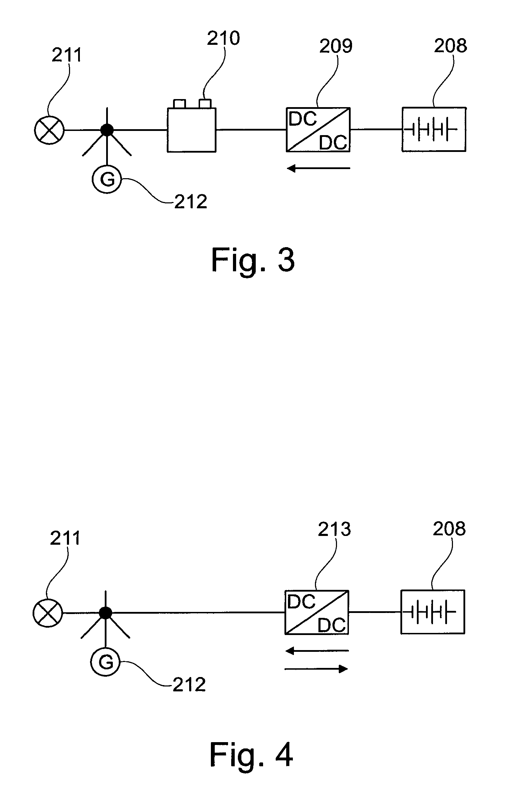

Fig. 3 zeigt eine schematische Darstellung einer Energieversorgungseinheit eines Fahrzeug-Bordnetzes nach dem Stand der Technik. Die Energieversorgungseinheit weist eine Traktionsbatterie 208 auf, die mit der Eingangsseite eines DC-DC-Wandlers 209 verbunden ist. Die Ausgangsseite des DC-DC-Wandlers 209 ist mit der Bord-Batterie 210 verbunden. Die Fahrzeug-Batterie ist über einen Sternpunkt mit einem Generator 212 und einer Lampe 211 verbunden. Das Fahrzeug-Bordnetz weist jenseits der Ausgangsseite des DC-DC-Wandlers 209, also im Bereich der Bord-Batterie 210, des Generators 212 und der Lampe 211 nur eine Spannungsebene auf.

Fig. 4 zeigt eine schematische Darstellung einer Energieversorgungseinheit eines Fahrzeug-Bordnetzes nach der Erfindung. Man erkennt im Vergleich zu der Fig. 3, dass auf die Bord-Batterie 210 verzichtet werden kann. Dafür weist die Energieversorgungseinheit nun ein erfindungsgemäßes Stellglied 213 auf. Das Fahrzeug-Bordnetz weist jenseits der Ausgangsseite des DC-DC-Wandlers 209, also im Bereich der Bord-Batterie 210, des Generators 212 und der Lampe 211 eine erste Spannungsebene auf. Die Traktionsbatterie 208 weist eine zweite Spannungsebene auf, die um mindestens das zweifach, insbesondere bevorzugt um mindestens das fünffache Höher ist, als die Spannungsebene des Fahrzeug-Bordnetzes. In dieser Ausführungsform der Erfindung enthält der Generator 212 einen Wechselrichter, der die Wechselspannung, die durch den Generator erzeugt wird, bzw. die benötigt wird, um den Generator zu betreiben, in eine Gleichspannung zu wandeln. Der im Generator vorgesehene Wechselrichter kann nach Art des Wechselrichters 106 aus Fig. 2 ausgeführt sein. Die Lampe 211, die weiteren, nicht dargestellten Abnehmer an dem Sternpunkt und der Gleichstromanschluss an der Ausgangsseite des Stellglieds 213 sind in Parallelschaltung an den Gleichstromanschluss dieses Wechselrichters angeschlossen.

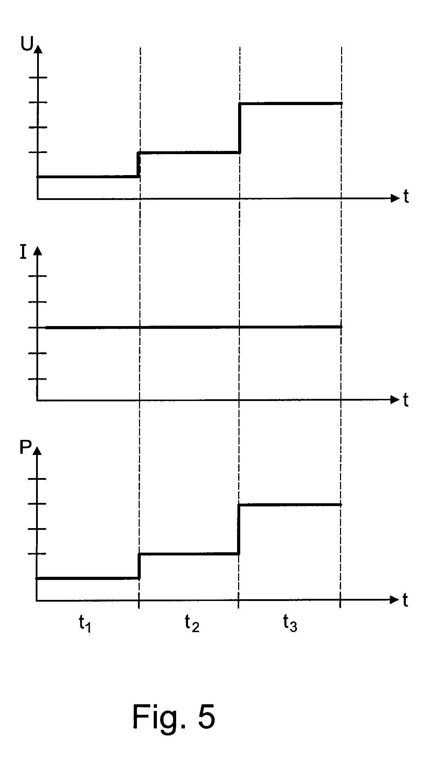

Fig. 5 zeigt den Verlauf der Spannung, des Stroms und der Leistung an der Ausgangsseite eines erfindungsgemäßen Stellglieds über die Zeit. Das hier verwendete Stellglied weist mehrere Energiespeichereinheiten, wie beispielsweise die in Fig. 2 dargestellte Batterie 105 auf, die in Parallelschaltung an den Gleichstromanschluss der Eingangsseite des Stellglieds angeschlossen sind. Die Art des Anschlusses an den Gleichstromanschluss des Stellglieds ist dabei derart gewählt, dass einzelne Energiespeichereinheiten zugeschaltet werden können. Die Energiespeichereinheiten haben jeweils ein gleiches Spannungsniveau. Die Fig. 4 zeigt nun, dass in einem ersten Betriebszustand (Zeitabschnitt t1) an dem Gleichstromanschluss an der Ausgangsseite des erfindungsgemäßen Stellglieds ein erstes Spannungsniveau anliegt, ein Strom mit einer gewissen Stärke fließt und dabei eine sich daraus ergebende Leistung übertragen wird. In einem zweiten Betriebszustand (Zeitabschnitt t2) wird eine weitere Energiespeichereinheit zugeschaltet. Dadurch erhöht sich das an der Ausgangsseite des erfindungsgemäßen Stellglieds anliegende Spannungsniveau und die übertragene Leistung. Die Stromstärke bleibt konstant. In einem dritten Betriebszustand (Zeitabschnitt t3) wird eine weitere Energiespeichereinheit zugeschaltet. Dadurch erhöht sich das an der Ausgangsseite des erfindungsgemäßen Stellglieds anliegende Spannungsniveau und die übertragene Leistung. Die Stromstärke bleibt wiederum konstant.

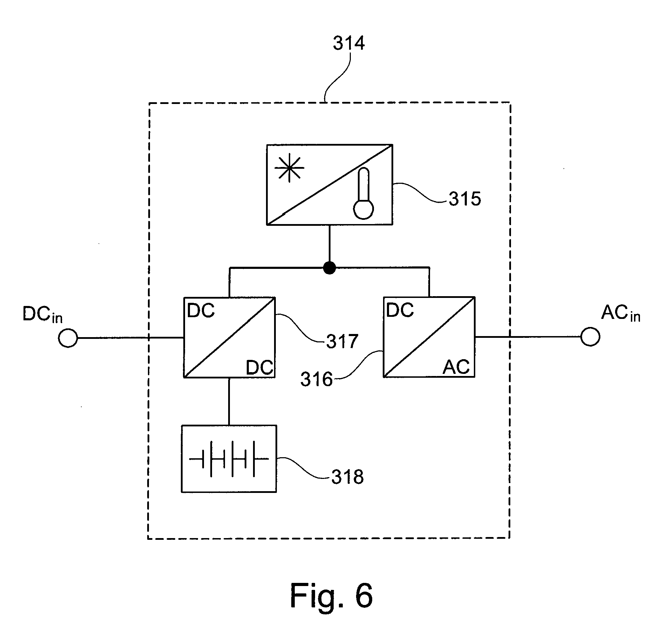

Fig. 6 zeigt den schematischen Aufbau eines erfindungsgemäßen Klimageräts 314. Das Klimagerät 314 weist eine gleichstrombetriebene Klimaeinheit 315 auf, die einen Ventilator und/oder Kompressoren und/oder Heizelemente aufweisen kann, um Umgebungsluft zu bewegen und/oder zu kühlen und/oder zu erwärmen. Ferner weist das Klimagerät einen Wechselrichter 316, vergleichbar dem Wechselrichter 106 aus der Fig. 2 und ein erfindungsgemäßes Stellglied 317, vergleichbar dem Stellglied 101 aus der Fig. 2 auf. In dem Gehäuse des Klimageräts ist ein Energiespeicher 318 integriert, der vergleichbar der Batterie 105 der Fig. 2 an den Gleichstromanschluss der Eingangsseite des Stellglieds 317 angeschlossen ist. Die Fig. 6 zeigt weiter, dass an der Ausgangsseite des Stellglieds 317 neben dem Gleichstromanschluss für die Parallelschaltung der Ausgangsseite des Stellglieds 317 mit der Klimaeinheit 315 an den Gleichstromanschluss des Wechselrichters 316 ein zusätzlicher Gleichstromanschluss (ein zusätzlicher Kanal) an dem Stellglied 317 vorgesehen ist, der zu einem Gleichstromanschluss DCin an dem Gehäuse des Klimageräts 314 führt. Dieser zusätzliche Kanal ist zusätzlich zu der Klimaeinheit 315 in Parallelschaltung an den Gleichstromanschluss des Wechselrichters 316 angeschlossen. Der Gleichstromanschluss DCin ermöglicht es, an das Klimagerät eine weitere Gleichstromquelle und/oder -senke, beispielsweise eine volatile Gleichstromquelle, bspw. eine Photovoltaikanlage anzuschließen. Über den Wechselstromanschluss des Wechselrichters 316 kann das Klimagerät 314 an ein Wechselstromnetz angeschlossen werden.

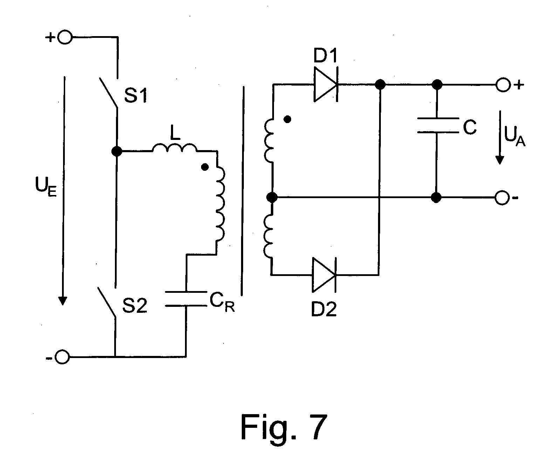

Die Fig. 7 zeigt eine schematische Ansicht eines erfindungsgemäßen Stellglieds mit einem DC-DC-Wandler in Resonanzbauweise. Dabei zeigt die Fig. 7 den Grundaufbau eines solchen Stellglieds. Das Stellglied gemäß Fig. 7 weist einen Gleichstromanschluss UE an einer Eingangsseite auf. Das Stellglied gemäß Fig. 7 weist ferner einen Gleichstromanschluss UA an einer Ausgangsseite aufZwischen dem Gleichstromanschluss UE an der Eingangsseite und dem Gleichstromanschluss UA an der Ausgangsseite ist ein DC-DC-Wandler zwischengeschaltet, wobei der DC-DC-Wandler zwei Bauelemente in Form der Schalter S1 und S2 aufweist, deren Betriebszustand, insbesondere deren Öffnungszustand und Schließzustand von einem nicht dargestellten Kontroller angesteuert oder geregelt werden. Die Spule L und die Kapazität CR bilden einen eingangsseitigen Schwingkreis des DC-DC-Wandlers. Ausgangsseitig sind zwei Spulen vorgesehen sowie eine parallel geschaltete Kapazität C.

Die Schalter S1 und S2 werden über PWM-Signale gesteuert, bzw. geregelt. Ist der Schalter S1 geschlossen, ist der Schalter S2 geöffnet. Ist der Schalter S1 geöffnet, ist der Schalter S2 geschlossen. Das PWM-Signal wird insbesondere bevorzugt so gewählt, dass die Frequenz des Schließens der Schalter der Resonanzfrequenz des Schwingkreises des DC-DC-Wandlers entspricht. Die Zeitspanne, wie lange der Schalter geöffnet und geschlossen wird im Verhältnis zu einer sich daran anschließenden Phase, in der der Schalter nur geöffnet ist, hat Einfluß auf die übertragene Leistung. Je länger die Phase andauert, in der der Schalter geöffnet und geschlossen wird, desto mehr Leistung wird übertragen. Durch Wahl des Verhältnisses, wie lange der Schalter innerhalb eines Takts geschlossen und wie lange er innerhalb eines Takts geöffnet ist, kann die Spannungsanhebung, bzw. -absenkung beeinflusst werden. Je länger der Schalter innerhalb eines Takts geschlossen ist, desto höher wird die Spannung gesetzt.

Um die einen bidirektionalen DC-DC-Wandler bereitzustellen, wird die in Fig. 7 gezeigte Schaltung verdoppelt, wobei einmal die gehäuseseitige Eingangsseite des Stellglieds die Spannungsseite UE ist und einmal die gehäuseseitige Ausgangsseite des Stellglieds die Spannungsseite UE ist. Durch von dem Kontroller betätigbare Schalter kann der Leistungsfluss entweder von der gehäuseseitigen Eingangsseite zur gehäuseseitigen Ausgangsseite erfolgen. Dann wäre die Schaltung eingeschaltet, die wie die in Fig. 7 dargestellte Schaltung aussieht. Oder der Leistungsfluss kann von der gehäuseseitigen Ausgangsseite zur gehäuseseitigen Eingangsseite erfolgen. Dann wäre die Schaltung eingeschaltet, die zu der in Fig. 7 dargestellten spiegelbildlich ist.

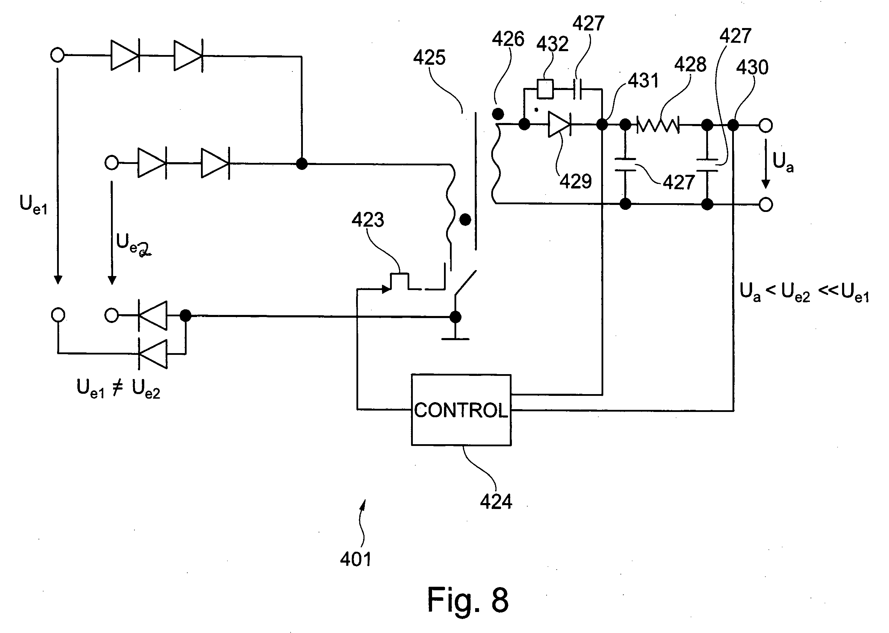

Fig. 8 zeigt den Grundaufbau eines erfindungsgemäße Stellglieds erweitert um die Möglichkeit, an der Eingangsseite einen zusätzlichen Gleichstromanschluss vorzusehen.

Das in Fig. 8 dargestellte Stellglied 401 weist einen ersten Gleichstromanschluss Ue1 an einer Eingangsseite auf. Zudem weist es einen zweiten Gleichstromanschluss Ue2 an der Eingangsseite auf. Die am Gleichstromanschlusses Ue1 anliegende Spannung ist höher als die am Gleichstromanschluss Ue2 anliegende Spannung. Der Gleichstromanschluss Ue1 und der Gleichstromanschluss Ue2 sind geschützt über Dioden parallel zu einander an eine Spule 425 geschaltet. In Reihe zu der Spule 425 ist ein Schalter 423 geschaltet, der über einen Kontroller 424 mit Impulsen (dargestellt beim Bezugszeichen 423) angesteuert und geschaltet werden kann.

Das Stellglied weist einen Gleichstromanschluss Ua an seiner Ausgangsseite auf. Der Gleichstromanschluss Ua ist Teil eines Schwingkreises mit einer Spule 426, Kondensatoren 427, Winderständen 428 und Dioden 429 sowie ein Widerstand 432. Ferner sind eine erste Messtelle 431 und eine zweite Messstelle 430 vorgesehen. Die an den Messstellen 431, 430 gemessene Spannung wird dem Kontroller 424 zugeführt und bildet die Grundlage des Regelverfahrens, mit dem dieser die Betriebszustände des Schalters 423 regelt.

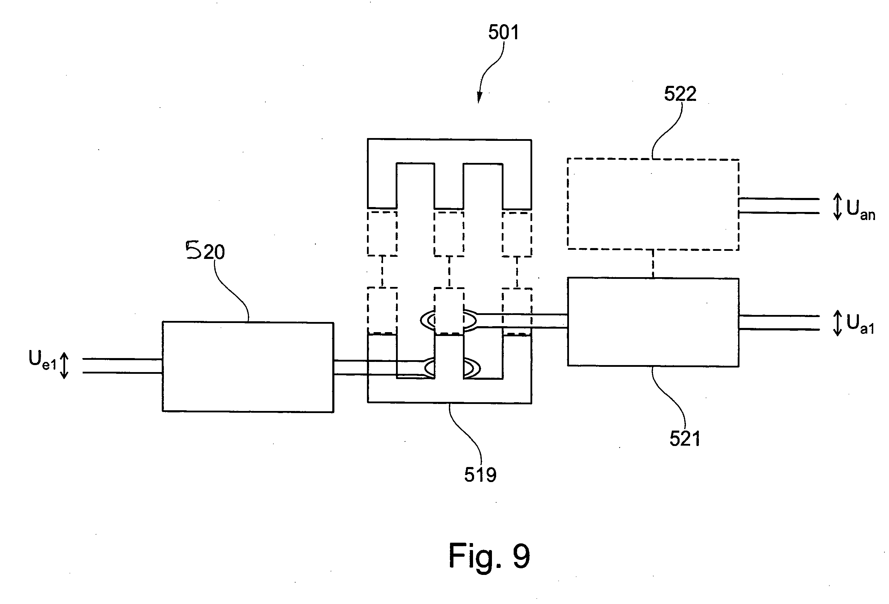

Fig. 9 zeigt eine schematische Darstellung eines modular erweiterbaren Stellglieds 501. Das Stellglied 501 weist eine Induktivität mit einem Eisenkern 519 auf. Das Stellglied weist einen Gleichstromanschluss Ue1 an der Eingangsseite auf. Das Bauteil 520 ist vergleichbar des linken Schaltungsteils in Fig. 7 ausgeführt. Die Spule ist als Wickelung um den Eisenkern 519 zu sehen. Ferner weist das Stellglied 501 mehrere Gleichstromanschlüsse Ua1 bis Uan an der Ausgangsseite auf. Die Bauteile 521 und 522 sind vergleichbar dem rechten Schaltungsteil in Fig. 7 ausgeführt. Die Spulen sind als Wickelungen um den Eisenkern 519 zu sehen. Die Zahl der Gleichstromanschlüsse an der Ausgangsseite kann erhöht oder reduziert werden. Die einzelnen Baugruppen können modular aufgebaut werden. Durch Aufstecken der Spule der jeweiligen Baugruppe auf den Eisenkern 519 kann die jeweilige Baugruppe in das Stellglied 501 eingebunden werden.

## Patentansprüche

1. Stellglied mit
• einem Gleichstromanschluss an einer Eingangsseite und
• einem Gleichstromanschluss an einer Ausgangsseite und
• einem zwischen dem Gleichstromanschluss an der Eingangsseite und dem Gleichstromanschluss an der Ausgangsseite zwischengeschalteten, bidirektionalen DC-DC-Wandler, wobei der DC-DC-Wandler zumindest ein Bauelement aufweist, dessen Betriebszustand von einem Kontroller angesteuert oder geregelt wird,
**dadurch gekennzeichnet, dass**
das vom Kontroller durchgeführte Steuerungs-, bzw. Regelungsverfahren für das zumindest eine Bauelement des DC-DC-Wandlers veränderbar ist, so dass das Stellglied eine an der Eingangsseite anliegende Eingangsspannung aus einem ersten Spannungsbereich in eine an der Ausgangsseite anliegende Ausgangsspannung in einem zweiten Spannungsbereich wandelt, wobei der erste Spannungsbereich von dem zweiten Spannungsbereich dadurch unabhängig ist, dass der Kontroller unterschiedliche Steuerungs-, bzw. Regelungsverfahren durchführen kann,
und/oder
das Stellglied eine an der Eingangsseite anliegende, variable Eingangsspannung in eine an der Ausgangsseite anliegende, variable Ausgangsspannung dadurch wandelt, dass der Kontroller unterschiedliche Steuerungs-, bzw. Regelungsverfahren durchführen kann.

2. Stellglied nach Anspruch 1, **dadurch gekennzeichnet, dass** die an der Eingangsseite anliegende Eingangsspannung und/oder die an der Ausgangsseite anliegende Ausgangsspannung während des Betriebes in ihrer Höhe und/oder Form dadurch änderbar ist, dass der Kontroller unterschiedliche Steuerungs-, bzw. Regelungsverfahren durchführen kann.

3. Stellglied mit
• einem Gleichstromanschluss an einer Eingangsseite und
• einem Gleichstromanschluss an einer Ausgangsseite und
• einem zwischen dem Gleichstromanschluss an der Eingangsseite und dem Gleichstromanschluss an der Ausgangsseite zwischengeschalteten, bidirektionalen DC-DC-Wandler, wobei der DC-DC-Wandler zumindest ein Bauelement aufweist, dessen Betriebszustand von einem Kontroller angesteuert oder geregelt wird,
insbesondere nach einem der Ansprüche 1 oder 2,
**gekennzeichnet durch** die Ausführung des DC/DC-Wandlers in Resonanzbauweise.

4. Stellglied nach Anspruch 3, **gekennzeichnet durch** die Auftrennung des Resonanzkreises in mehrere Kanäle.

5. Stellglied nach Anspruch 4, **dadurch gekennzeichnet, dass** die Kopplung der Kanäle induktiv erfolgt.

6. Stellglied nach einem der Ansprüche 1 bis 5, **gekennzeichnet durch** mehrere Kanäle auf der Eingangsseite und/oder auf der Ausgangsseite.

7. Stellglied nach einem der Ansprüche 4 bis 6, **dadurch gekennzeichnet, dass** die die einzelnen Kanäle der der Energieübertragung bildenden Schaltungen als Module ausgeführt sind, die aneinander gereiht und/oder miteinander versteckt werden können.

8. System mit einem Spannungswandler mit einem Gleichstromanschluss und mit einer Gleichstromquelle und/oder einer Gleichstromsenke und einer weiteren Gleichstromquelle und/oder Gleichstromsenke, wobei die Gleichstromquelle und/oder Gleichstromsenke und die weitere Gleichstromquelle und/oder Gleichstromsenke in Parallelschaltung an dem Gleichstromanschluss des Spannungswandlers angeschlossen sind,
wobei das System ein Stellglied hat, mit dem die an der Gleichstromquelle anliegende Spannung und/oder der von der Gleichstromquelle abgegebene Strom und/oder die von der Gleichstromquelle abgegebene Leistung eingestellt werden kann, und/oder ein Stellglied hat, mit dem die an der Gleichstromsenke anliegende Spannung und/oder der von der Gleichstromsenke aufgenommene Strom und/oder die von der Gleichstromsenke aufgenommene Leistung eingestellt werden kann,
wobei das System
- eine Spannungsmessvorrichtung, die die Spannung an dem Gleichstromanschluss messen kann, und/oder
- eine Strommessvorrichtung, die den über den Gleichstromanschluss fließenden Strom messen kann, und/oder
- eine Leistungsermittlungseinheit aufweist, die die über den Gleichstromanschluss an den Spannungswandler gelieferte Leistung, bzw. die über den Gleichstromanschluss von dem Spannungswandler gelieferte Leistung ermittelt,
wobei ein Stellglied nach einem der Ansprüche 1 bis 7 eingesetzt wird.

9. System mit einem Spannungswandler mit einem Gleichstromanschluss und mit einer Gleichstromquelle und/oder einer Gleichstromsenke und einer weiteren Gleichstromquelle und/oder Gleichstromsenke, wobei die Gleichstromquelle und/oder Gleichstromsenke und die weitere Gleichstromquelle und/oder Gleichstromsenke in Parallelschaltung an dem Gleichstromanschluss des Spannungswandlers angeschlossen sind,
wobei das System ein Stellglied hat, mit dem die an der Gleichstromquelle anliegende Spannung und/oder der von der Gleichstromquelle abgegebene Strom und/oder die von der Gleichstromquelle abgegebene Leistung eingestellt werden kann, und/oder ein Stellglied hat, mit dem die an der Gleichstromsenke anliegende Spannung und/oder der von der Gleichstromsenke aufgenommene Strom und/oder die von der Gleichstromsenke aufgenommene Leistung eingestellt werden kann,
wobei das System
- eine Spannungsmessvorrichtung, die die Spannung an dem Gleichstromanschluss messen kann, und/oder
- eine Strommessvorrichtung, die den über den Gleichstromanschluss fließenden Strom messen kann, und/oder
- eine Leistungsermittlungseinheit aufweist, die die über den Gleichstromanschluss an den Spannungswandler gelieferte Leistung, bzw. die über den Gleichstromanschluss von dem Spannungswandler gelieferte Leistung ermittelt,
wobei ein Stellglied
• einen Gleichstromanschluss an einer Eingangsseite und
• einen Gleichstromanschluss an einer Ausgangsseite und
• einen zwischen dem Gleichstromanschluss an der Eingangsseite und dem Gleichstromanschluss an der Ausgangsseite zwischengeschalteten, bidirektionalen DC-DC-Wandler aufweist und der DC/DC-Wandler in Resonanzbauweise ausgeführt ist.

10. System nach Anspruch 8 oder 9, **dadurch gekennzeichnet, dass** sich die an der Eingangsseite anliegende Eingangsspannung und/oder die an der Ausgangsseite anliegende Ausgangsspannung während des Betriebes selbsttätig ändert.

11. System nach einem der Ansprüche 8 bis 10, **gekennzeichnet, durch** einen austauschbaren Energiespeicher.

12. System nach Anspruch 11, **dadurch gekennzeichnet, dass** die Spannung des Energiespeichers in einem weiten Bereich variabel ist, insbesondere im Bereich von 0,01 V DC bis 1000 V DC.

13. System nach einem der Ansprüche 11 bis 12, **dadurch gekennzeichnet, dass** der Energiespeicher ein elektrochemischer Speicher ist.

14. System nach einem der Ansprüche 8 bis 14, **dadurch gekennzeichnet, dass** die Systemleistung durch Erhöhung der Spannungsniveaus vergrößert werden kann, insbesondere durch das Parallelschalten von zusätzlichen Energiespeichern an einem Gleichstromanschluss des DC/DC-Wandlers, wobei die Energiespeichereinheiten jeweils gleiche Spannungsniveaus besitzen.

15. System nach einem der Ansprüche 8 bis 14, **dadurch gekennzeichnet, dass** der Gleichstromanschluss des DC/DC-Wandlers an eine Gleichstromquelle und/oder Gleichstromsenke mit dynamischer, im Betrieb veränderbarer Spannung angeschlossen ist, insbesondere an den parallelen Anschluss einer Photovoltaikanlage.

16. Energieversorgungseinheit für Fahrzeug-Bordnetze, mit einem Gleichstromanschluss für den Anschluss des Fahrzeug-Bordnetzes und mit einer Gleichstromquelle und/oder Gleichstromsenke, **dadurch gekennzeichnet, dass** die Spannungsebene der Gleichstromquelle und/oder Gleichstromsenke (erste Spannungsebene) anderes ist, als die Spannungsebene der an dem Gleichstromanschluss anliegende Gleichspannung (weitere Spannungsebene), wobei die ersten Spannungsebene gleich oder mehr als doppelt so hoch, insbesondere gleich oder mehr als fünffach so hoch ist, wie die weitere Spannungsebene, und dass der Energiefluss bidirektional aus der Energieversorgungseinheit in das Fahrzeug-Bordnetz und aus dem Fahrzeug-Bordnetz in die Energieversorgungseinheit erfolgen kann.

17. Energieversorgungseinheit nach Anspruch 16, **dadurch gekennzeichnet, dass** sie ein Stellglied nach einem der Ansprüche 1 bis 7 aufweist und/oder in ein System nach einem der Ansprüche 1 bis 15 eingebettet ist.

18. Klimagerät mit einem Gehäuse und einem in dem Gehäuse integrierten Energiespeicher sowie einem Wechselspannungsanschluss und/oder einem Gleichspannungsanschluss für eine externe Energieversorgung.

19. Klimagerät nach Anspruch 18, **dadurch gekennzeichnet, dass** es ein Stellglied nach einem der Ansprüche 1 bis 7 aufweist und/oder in ein System nach einem der Ansprüche 1 bis 15 eingebettet ist.

20. Spannungsversorgung für elektronische Schaltungen, **dadurch gekennzeichnet, dass** mindestens eine erste und eine zweite Eingangsspannungen und mindestens eine Ausgangsspannung anliegt und dass die Ausgangsspannung in ihrem Betrag kleiner als die erste und die zweite Eingangsspannung ist, wobei der Energiefluss von dem ersten und dem zweiten Eingang hin zur Ausgangsseite erfolgen kann.

21. Spannungsversorgung nach Anspruch 20, **dadurch gekennzeichnet, dass** es ein Stellglied nach einem der Ansprüche 1 bis 7 aufweist und/oder in ein System nach einem der Ansprüche 1 bis 15 eingebettet ist.

22. System zur Energieversorgung von Rechenzentrumseinheiten, insbesondere von einzelnen Server-Racks, **dadurch gekennzeichnet, dass** mindestens ein Wechselspannungsanschluss und/oder mindestens ein erster Gleichspannungsanschluss zu einer externen Energieversorgung vorhanden ist und ein Energiespeicher unmittelbar in das System integriert ist und dieser an den mindestens einen Wechselspannungsanschluss und/oder mindestens einen erster Gleichspannungsanschluss angeschlossen ist und mindestens ein zweiter Gleichspannungsanschluss vorhanden ist, an welchen der Anschluss einer volatilen Gleichstromquelle möglich ist.

23. System zur Energieversorgung von Rechenzentrumseinheiten nach Anspruch 22, **dadurch gekennzeichnet, dass** es ein Stellglied nach einem der Ansprüche 1 bis 7 aufweist und/oder in ein System nach einem der Ansprüche 1 bis 15 eingebettet ist.

24. Gleichspannungsladegerät für Elektrofahrzeuge aus einem Gleichspannungsnetz, welches einen bidirektionalen Energiefluss ermöglicht, **dadurch gekennzeichnet, dass** mindestens ein erster Gleichspannungsanschluss und mindestens ein zweiter Gleichspannungsanschluss vorhanden ist, wobei die an dem ersten Gleichspannungsanschluss anliegende Gleichspannung und die an dem zweiten Gleichspannungsanschluss anliegende Gleichspannung in der Höhe und/oder Form der Spannung zeitlich variabel sind weiterhin **dadurch gekennzeichnet, dass** mindestens einer der Gleichspannungsanschlüsse einen direkten oder parallelen Anschluss an eine volatile Gleichstromquelle zulässt, insbesondere an eine Photovoltaikanlage.

25. Gleichspannungsladegerät für Elektrofahrzeuge nach Anspruch 24, **dadurch gekennzeichnet, dass** es ein Stellglied nach einem der Ansprüche 1 bis 7 aufweist und/oder in ein System nach einem der Ansprüche 1 bis 15 eingebettet ist.
